(19) Europäisches Patentamt
European Patent Office
Office européen des brevets

(11) Veröffentlichungsnummer: **0 538 315 B1**

(12) **EUROPÄISCHE PATENTSCHRIFT**

(45) Veröffentlichungstag der Patentschrift: **20.12.95**

(51) Int. Cl.⁶: **B01J 20/32**, B01J 20/28, B01J 45/00, B01D 15/00

(21) Anmeldenummer: **91912553.4**

(22) Anmeldetag: **10.07.91**

(86) Internationale Anmeldenummer:
**PCT/EP91/01290**

(87) Internationale Veröffentlichungsnummer:
**WO 92/00805 (23.01.92 92/03)**

(54) **PORÖSE, NICHTPARTIKULÄRE UND KONVEKTIV PERMEABLE MATRIX**

(30) Priorität: **10.07.90 DE 4021905**

(43) Veröffentlichungstag der Anmeldung:
**28.04.93 Patentblatt 93/17**

(45) Bekanntmachung des Hinweises auf die Patenterteilung:
**20.12.95 Patentblatt 95/51**

(84) Benannte Vertragsstaaten:
**DE FR GB**

(56) Entgegenhaltungen:
EP-A- 82 355          EP-A- 111 714
EP-A- 0 082 355     EP-A- 0 280 840
EP-A- 0 308 206     EP-A- 0 337 144
EP-A- 0 341 413     EP-A- 0 366 042
WO-A-91/03317

(73) Patentinhaber: **SARTORIUS AG**
**Weender Landstrasse 94-108**
**D-37070 Göttingen (DE)**

(72) Erfinder: **DEMMER, Wolfgang**
**Lindenbreite 11**
**D-3400 Göttingen (DE)**
Erfinder: **HÖRL, Hans-Heinrich**
**Breslauer Strasse 5**
**D-3406 Bovenden (DE)**
Erfinder: **NUSSBAUMER, Dietmar**
**Im Tale 1**
**D-3400 Göttingen (DE)**
Erfinder: **WEISS, Abdul, Razak**
**Elly Heuss Knapp Strasse 3**
**D-3400 Göttingen (DE)**
Erfinder: **WÜNN, Eberhard**
**Obere Wiesen 6**
**D-3400 Göttingen-Nikolausberg (DE)**

(74) Vertreter: **Köhler, Rudolf**
**c/o Sartorius AG**
**Weender Landstrasse 94-108**
**D-37070 Göttingen (DE)**

**Beschreibung**

Die Erfindung betrifft eine poröse, nichtpartikuläre und konvektiv permeable Membran gemäß dem Oberbegriff des Anspruchs 1.

Wechselwirkungen zwischen festen und flüssigen Phasen auf der Grundlage von Adsorption, chemischer Veränderung durch Katalyse oder chemischer Veränderung durch Reaktion mit einem auf einer Matix befindlichen Reaktanden finden Anwendung in der adsorptiven Stofftrennung, der heterogenen Katalyse und der Festphasensynthese ("solid phase synthesis"). Zur Festphasensynthese wird auch die Anwendung auf Reaktionsmedien in Gestalt unlöslicher polymerer Reagentien ("polymeric reagents") gerechnet, und sie beruht darauf, daß ein Reaktand in an einem festen Träger fixierter Form eingesetzt wird, während der oder die Reaktionspartner in flüssiger Phase vorliegen. Dabei kann das Reaktionsprodukt entweder von vornherein in der flüssigen Phase anfallen oder, insbesondere bei mehrstufigen Umsetzungen wie z.B. der Peptidsynthese nach Merrifield, in einem nachfolgenden Schritt vom Träger abgelöst werden. Dadurch werden in bestimmten Fällen gegenüber den entsprechenden Homogenreaktionen Vorteile in bezug auf Ausbeute, Reinheit oder Abtrennbarkeit des Produkts erreicht.

All diesen Heterogenprozessen ist gemeinsam, daß die mit einer Matrix erreichbare Raum-Zeit-Ausbeute im wesentlichen aus drei Größen resultiert:

a) der Kinetik des Elementarvorgangs an der Phasengrenze

b) der Raumdichte an den zur Wechselwirkung befähigten Zentren

c) der Kinetik des Stofftransports in der flüssigen Phase.

Während die Kinetik des Elementarvorgangs im wesentlichen von seinem Mechanismus, der Temperatur und der Konzentration abhängt, werden die Raumdichte und die Kinetik des Stofftransports von Eigenschaften der festen Matrix bestimmt.

Eine hohe Raumdichte an wirksamen Zentren und damit eine hohe Wirksamkeit setzt u.a. eine große spezifische Oberfläche der festen Phase und damit entweder eine geringe Partikelgröße oder eine hohe Porosität voraus. Da dem Einsatz extrem feiner Feststoffe in der Praxis Grenzen gesetzt sind, werden im allgemeinen hochporöse Matrices verwendet, was sich jedoch nachteilig auf die Kinetik des Stofftransports auswirkt, weil der Stofftransport bei den heute noch überwiegend eingesetzten partikulären Matrices praktisch ausschließlich diffusiv und daher langsam erfolgt (Diffusionslimitierung). Durchgehende Poren aufweisende nichtpartikuläre Matrices bieten demgegenüber die Möglichkeit zum überwiegend konvektiven Stofftransport unter der Einwirkung einer Druckdifferenz und damit zu einer mehr oder weniger wirksamen Ausschaltung der Diffusionslimitierung.

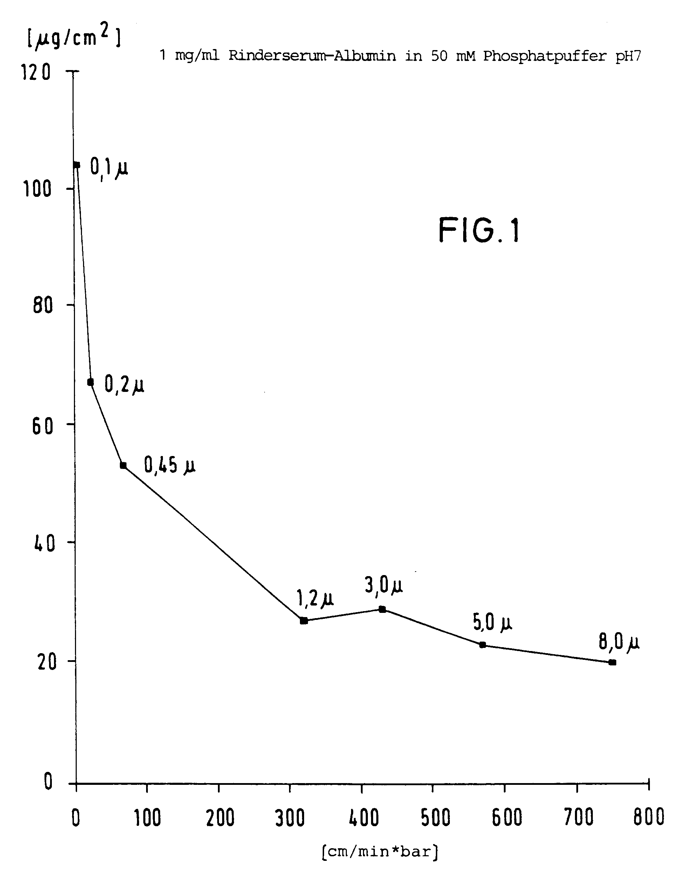

Das Hauptproblem bei der Umsetzung dieser an sich bekannten Sachverhalte zu einer technisch zielführenden Maßnahme besteht bisher in dem Mangel an einer universell einsetzbaren, nichtpartikulären Matrix, die eine ausreichende Wirksamkeit für den betreffenden Prozeß mit der erforderlichen hydraulischen Permeabilität verbindet. Dies kann am Beispiel der Oberflächenadsorption von Proteinen an mikroporösen Cellulosenitratmembranen (siehe Fig. 1) gezeigt werden, wobei eine Erhöhung der Adsorptionskapazität durch Erhöhung der spezifischen Oberfläche infolge der damit verbundenen Verminderung der Porengröße von einer drastischen Abnahme der hydraulischen Permeabilität begleitet ist. Dieser Zusammenhang kann in dem Sinn verallgemeinert werden, daß nichtpartikuläre poröse Matrices, deren zur Wechselwirkung befähigte Zentren sich ausschließlich auf der Oberfläche der festen Phase befinden, nicht gleichzeitig hohe Wirksamkeit und hohe Permeabilität aufweisen können.

**Stand der Technik**

In der US-PS 4.663 163 (Hou) werden poröse, flächige Adsorptionsmedien vorwiegend für den Ionenaustausch beschrieben, die durch Fixierung und Vernetzung eines Copolymers von vorzugsweise Glycidylmethacrylat und einem ionischen Monomeren auf faserige Träger, vorzugsweise bestehend aus Cellulose, und anschließende Verarbeitung der Fasern zu einem filzartigen Bahnmaterial hergestellt werden. Untersuchungen an einem Handelsprodukt der Patentinhaberin von US-PS 4,663 163 (Zetaprep, Cuno Inc.), bei dem es sich nach einer Firmendruckschrift um ein patentgemäßes Erzeugnis handelt, haben ergeben, daß dieses Handelsprodukt zwar eine hohe statische, aber nur eine sehr geringe dynamische Bindungskapazität für Proteine aufweist (siehe Vergleichsbeispiel 1). Darüber hinaus ist der Firmendruckschrift zu entnehmen, daß das Produkt nicht über pH = 11 eingesetzt werden soll und eine längere Einwirkungszeit von N/10 NaOH vermieden werden soll. Dies ist beispielsweise unzureichend für eine Entpyrogenisierung, die üblicherweise durch eine eine mehrstündige Einwirkung von 1-2 N NaOH erfolgt.

Unter der Bezeichnung "Acti-Disc" wird von der FMC-Corporation eine Typenreihe von flächigen Ionenaustauschern vertrieben, die laut einer Firmendruckschrift von FMC aus einer mikroporösen Schicht besteht, die mit Ionenaustauschergruppen derivatisierte Kieselsäure enthält. Auch dieses Material Zeigt mit steigender Beladungsgeschwindigkeit ein starkes Absinken der dynamischen Bindungskapazität (siehe Vergleichsbeispiel 1). Als Ursache dafür wird angenommen, daß das Adsorbens keine zusammenhängende, poröse Matrix bildet, sondern lediglich in einer porösen Matrix eingebettet ist, so daß dem konvektiven Stofftransport durch das Adsorbens (soweit ein solcher überhaupt stattfindet), ein Bypass-Strom an den Kieselgelpartikeln vorbei überlagert ist. Eine Anwendung von Laugen zur Entpyrogenisierung verbietet sich bei diesem Produkt von selbst wegen der Laugenlöslichkeit von Silikaten.

Ähnlich im Aufbau sind die unter der Bezeichnung "Bio-Rex chromatography membranes" vertriebene Produkte (Bio-Rad), bei denen sowohl statische als auch dynamische Bindungskapazität für Proteine niedrig sind. Sie bestehen aus einem in die poröse PTFE-Membrane eingebetteten partikulären Ionenaustauscher. Neben der oben erwähnten Erscheinung dürfte in diesem Fall ein Molekularsiebeffekt wirksam werden, weil die bei niedermolekularen Proteinen (z.B. Cytochrom C) ohnehin schon niedrige Bindung bei höheren molekularen Proteinen (z.B. Serumalbumin) auf extrem niedrige Werte absinkt. Da das untersuchte Adsorbens einen stark sauren Ionenaustauscher darstellte und die Tests bei pH = 7 durchgeführt wurden, scheiden die unterschiedlichen isoelektrischen Punkte der Testsubstanzen als Ursache für diesen Befund jedenfalls aus. Darüber hinaus ist das gebundene niedermolekulare Protein praktisch nicht mehr eluierbar.

Ein weiteres Handelsprodukt (Memsep DEAE, Millipore, früher von Domnick Hunter vertrieben) zeigt eine niedrige statische Bindungskapazität, nicht jedoch das vorstehend erwähnte Absinken der Kapazität unter dynamischen Bedingungen. Im Hinblick auf die Handhabbarkeit und Verarbeitbarkeit besonders nachteilig ist der Umstand, daß das Produkt im feuchten Zustand nur eine minimale mechanische Festigkeit sowie im trockenen Zustand hohe Sprödigkeit aufweist. Einer Patentanmeldung des ursprünglichen Herstellers (DE-OS 38 04 430 A1, Le Minh Son), in der offensichtlich dieses Produkt beschrieben wird, ist zu entnehmen, daß es sich um eine mikroporöse Cellulosehydratmembrane handelt, die durch Kopplung von ionischen Gruppen an die Cellulose über Etherbrücken modifiziert ist.

In den Eigenschaften den Memsep-Membranen vergleichbar und laut Firmendruckschrift identisch aufgebaut sind auch zwei bereits lange Zeit auf dem Markt befindliche Produkte (DEAE Cellulosemembrane NA 45, CM Cellulosemembrane NA49, Schleicher & Schüll).

Keines der auf dem Markt befindlichen Produkte erfüllt gleichzeitig die an ein nichtpartikuläres Adsorbens für technische Zwecke zu stellenden Anforderungen, nämlich gleichzeitig hohe dynamische Bindungskapazität, hohe Ausbeute bei der Elution, einwandfreie mechanische Handhabbarkeit und hohe chemische Beständigkeit.

## Aufgabenstellung und Lösung

Die Erfindung stellt sich die Aufgabe, nichtpartikuläre, konvektiv permeable Matrices zur Verfügung zu stellen, die zu gezielten Wechselwirkungen mit Komponenten einer flüssigen Phase befähigt sind und die die anhand von Flächenadsorbentien nach dem Stand der Technik dargelegten Nachteile nicht aufweisen. Insbesondere besteht die Aufgabe darin, eine auch unter dynamischen Bedingungen hohe Wirksamkeit mit hoher hydraulischer Permeabilität, hoher chemischer Beständigkeit und mit mechanischen Eigenschaften wie Festigkeit, geringe Sprödigkeit zu verbinden, die für die Handhabbarkeit und Verarbeitbarkeit zu technisch einsetzbaren, größeren Einheiten erforderlich sind.

Diese Aufgabe wird bei einer Matrix der eingangs erwähnten Art gelöst mit den Merkmalen des kennzeichnenden Teils von Anspruch 1 sowie mit einem Verfahren gemäß Anspruch 13 und einer Verwendung gemäß Anspruch 16.

Eine erfindungsgemäße Matrix kann so hergestellt werden, daß die innere und äußere Oberfläche eines eine Schwammstruktur aufweisenden Trägers nach an sich zur Oberflächenpfropfung bekannten Verfahren mit einer Schicht eines unvernetzten oder geringfügig vernetzten Polymeren überzogen wird, das in dem flüssigen Medium weitgehend solvatisierbar ist. Bevorzugt liegen die einzelnen Polymerketten in einem entknäuelten Zustand vor, und das solvatisierte Polymer nimmt zwischen 2,5 und 97 % des Porenvolumens ein, vorzugsweise zwischen 20 und 90 %. Die einzelnen Ketten des aufgepfropften Polymeren tragen entweder an jeder Monomereinheit, oder über ihre gesamte Länge statistisch verteilt die zur Wechselwirkung mit der oder den Komponenten der flüssigen Phase befähigten funktionellen Gruppen, Liganden bzw. Reaktanden, wobei entweder diese selbst die Solvatisierbarkeit durch die flüssige Phase bewirken, oder in statistischer Verteilung andere solvatisierbare Gruppen vorhanden sind. Für den Einsatz mit wäßrigen Medien werden dabei ionische Gruppen oder solche besonders bevorzugt, die eine oder mehrere Hydroxylgruppen aufweisen.

## Unlimitierte und transportlimitierte Kenngröße

Im folgenden werden für die Wechselwirkungen die Begriffe "unlimitierte Kenngröße" und "transportlimitierte Kenngröße" eingeführt. Darunter wird die Wirksamkeit einer Matrix für eine bestimmte Wechselwirkung ohne bzw. mit einer Transportlimitierung verstanden. Die transportlimitierte Kenngröße ist in der Praxis am wichtigsten, weil sie die technisch zumeist interessierende Raum-Zeit-Ausbeute bestimmt. Doch ist auch die unlimitierte Kenngröße von Bedeutung bei Anwendungen, in denen andere Kriterien als die Raum-Zeit-Ausbeute entscheidend sind.

Verfahrenstechnisch besteht der wesentliche Unterschied zwischen Adsorption und Festphasensynthese einerseits und Katalyse anderseits darin, daß sich bei ersteren die Matrix während des Gebrauchs durch Sättigung mit dem Adsorbenden bzw. Verbrauch des gebundenen Reaktanden erschöpft, während der Katalysator per definitionem unverändert bleibt. Dies ist bei der Definition der Kenngrößen zu berücksichtigen.

Allgemein ist die unlimitierte Kenngröße ein Maß für die Gesamtheit der zur Wechselwirkung befähigten Zentren, was auch ihre Zugänglichkeit für die beteiligten Komponenten voraussetzt. Eine direkte analytische Bestimmung, wie zum Beispiel die Titration der Ionenaustauschkapazität, ist meist nur von beschränkter Aussagekraft. So besteht beispielweise kein direkter Zusammenhang zwischen der titrierbaren Kapazität und der Proteinbindung oder der katalytischen Aktivität eines Ionenaustauschers. Die Kenngrößen müssen daher im allgemeinen anhand der Wechselwirkungen mit den interessierenden Komponenten bestimmt werden. Wenn die Wechselwirkung eine Adsorption ist, wird die Komponente auch mit "Zielsubstanz" oder "Zielkomponente" bezeichnet.

Bei Adsorbentien ist die unlimitierte Kenngröße die spezifische Gleichgewichtsbindungskapazität für die interessierende Komponente und ist beispielsweise auf die Masse, das Volumen oder gegebenenfalls die Fläche der Matrix bezogen. Da das Adsorptionsgleichgewicht u.a. von der Konzentration der interessierenden Komponente abhängig ist und die Adsorptionsisothermen der hier interessierenden Systeme meist vom Langmuir-Typ sind, nähert sich die Kapazität bei steigender Konzentration einem Sättigungswert, und dieser wird unter der Bezeichnung "statische Bindungskapazität" als unlimitierte Kenngröße definiert. Die transportlimitierte Kenngröße eines Adsorbens ist die "dynamische Bindungskapazität", worunter derjenige Teil der statischen Bindungskapazität verstanden wird, den das Adsorbens bei einer bestimmten Strömungsgeschwindigkeit aufweist, bis die Konzentration im Ablauf auf einen bestimmten Teil der Ausgangskonzentration angestiegen ist.

Bei Katalysatoren ist die unlimitierte Kenngröße die "spezifische katalytische Aktivität ohne Transportlimitierung". Sie ist meßtechnisch nicht direkt faßbar, weil Messungen unter Gleichgewichtsbedingungen hier nicht möglich sind. Es gibt jedoch Möglichkeiten, sie in bestimmten Fällen auf indirektem Weg zu ermitteln. Entsprechend ist die transportlimitierte Kenngröße als die "dynamische katalytische Aktivität" definiert. Sie ist meßbar und ergibt sich direkt aus der pro Zeiteinheit bei einer bestimmten Strömungsgeschwindigkeit gebildeten oder verbrauchten Menge eines Reaktanden bzw. Produktes. Bei Erhöhung der Austauschrate der flüssigen Phase steigt diese Größe an und nähert sich einem Grenzwert, der als "maximale katalytische Aktivität" des Katalysators bezeichnet wird. Diese Größe hat den Vorteil, daß die Änderung der Zusammensetzung der flüssigen Phase unter den genannten Bedingungen vernachlässigt werden kann. Insbesondere im Fall der enzymatischen Katalyse, bei der Effekte wie Produkt- und/oder Substratinhibierung berücksichtigt werden müssen, sind somit definierte Bedingungen gewährleistet.

Bei Matrices für die Festphasensynthese kann die Charakterisierung hinsichtlich der unlimitierten Kenngröße analog wie bei den Adsorbentien erfolgen, nämlich durch die Aufnahmefähigkeit für den Reaktanden, wobei hinsichtlich der transportlimitierten Kenngröße im konkreten Fall nach Zweckmäßigkeitsgesichtspunkten entschieden werden muß. Bei vollständig verlaufenden Reaktionen kann in Analogie zu den Adsorbentien verfahren werden, indem beispielsweise der Anstieg der Konzentration des nicht umgesetzten Reaktionspartners in der flüssigen Phase bei einer bestimmten Strömungsgeschwindigkeit erfaßt wird. Bei Gleichgewichtsreaktionen ist es zweckmäßiger, in Anlehnung an die Bestimmung der maximalen katalytischen Aktivität die maximale Umsetzungsrate des Reaktionspartners bei steigender Austauschrate der flüssigen Phase zugrundezulegen.

## Die Wechselwirkungen und die funktionellen Gruppen, Liganden bzw. Reaktanden

Die Wechselwirkungen der erfindungsgemäßen Matrices und deren funktionelle Gruppen, Liganden und Reaktanden sind in der Literatur für Matrices des Standes der Technik beschrieben und somit an sich bekannt.

Im Bereich der Adsorption sind die für die Reinigung und Anreicherung von Proteinen durch Adsorption in Frage kommenden Wechselwirkungen und die dafür geeigneten Gruppen oder Liganden am vielfältigsten. Unter Adsorption wird dabei generell eine reversible Bindung der Komponente an die Matrix verstanden. Bei der überwiegenden Anzahl der nachfolgend zusammengefaßten Wechselwirkungen handelt es sich um physikalische Vorgänge, also Vorgänge, die ohne Knüpfung kovalenter Bindungen ablaufen. Die einzige Ausnahme bildet dabei die "kovalente Chromatographie", die auf Chemiesorption beruht.

Bei der Ionenaustauscherchromatographie wird die unterschiedliche elektrische Ladung der Proteine bei unterschiedlichen pH-Werten zu ihrer Trennung ausgenutzt, bei der "hydrophoben Chromatographie" ihre unterschiedlich feste Bindung an hydrophobe Gruppen. Die Ionenaustauscher werden in stark saure, schwach saure, stark basische und schwach basische eingeteilt, wobei typische funktionelle Gruppen in der angegebenen Reihenfolge Sulfonsäure-, Carboxyl-, quarternäre Ammonium- und tertiäre Aminogruppen sind. Typische hydrophobe Liganden sind Alkylreste mit 4 bis 8 Kohlenstoffatomen und Phenylreste. Ähnlich in der Anwendung wie die hydrophobe Chromatographie, jedoch selektiver ist die "thiophile Chromatographie", durch die Proteine getrennt werden können, die unterschiedliche Affinität zu Liganden aufweisen, die mehrere Schwefelatome in Form von Thioether- und Sulfongruppen enthalten. Relativ selektiv sind auch weitere Mechanismen, die als IMAC ("immobilized metal affinity chromatography") und Farbstoffligandenchromatographie bekannt sind. Im ersten Fall werden Nebenvalenzen von Schwermetallen eingesetzt, die an Chelatliganden gebunden sind, beispielsweise an Iminodiessigsäurereste, im anderen Fall bestimmte Farbstoffmoleküle in immobilisierter Form für die reversible Proteinverbindung. Ein typischer Farbstoffligand ist der nach dem Colour-Index als "Reactive Blue 2" bezeichnete blaue Anthrachinon-Reaktivfarbstoff.

Zum Unterschied von den bisher erwähnten Adsorptionsmechanismen, die auf dem Einsatz von synthetischen Liganden beruhen, verwendet man bei der klassischen Affinitätschromatographie immobilisierte natürliche Liganden, wie z.B. Enzyminhibatoren, Enzymsubstrate oder Coenzyme zur Trennung der entsprechenden Enzyme. Auf diesem Weg wird in der Regel die höchste Spezifität der Trennung erreicht. Dies gilt auch für die Immunadsorption, wobei wahlweise entweder Antigen oder Antikörper immobilisiert und zur Bindung des jeweiligen Pendants verwendet werden. Zur Gruppe der natürlichen Liganden gehören auch Lectine zur Bindung von Glycoproteiden sowie Protein A bzw. Protein G zur Bindung vom Immunglobulinen.

Der bereits erwähnte und auf dem Mechanismus der Chemiesorption beruhende Ausnahmefall, der "kovalenten Chromatographie" erfolgt unter Knüpfung spezifischer und wieder lösbarer kovalenter Bindungen. Beispiele dafür sind der Phenylboronatligand für die Bindung von Glycoproteiden und die Sulfhydrylgruppe zur Bindung über reduktiv spaltbare Disulfidbrücken.

Einige der genannten Liganden kommen auch für andere Anwendungen als die Proteintrennung in Frage, so die Chelatliganden auch für die Abtrennung von Schwermetallen. Ionenaustauschergruppen können selbstverständlich für beliebige Ionenaustauschprozesse eingesetzt werden, darüber hinaus jedoch auch für Saure-Basen-Katalysen. So kann eine erfindungsgemäße Matrix mit Sulfonsäuregruppen in der H-Form für die saure Katalyse eingesetzt werden. Praktische Beispiele für die ein derartiger erfindungsgemäßer Katalysator in Frage kommt, ist die Veresterung von Alkoholen mit Carbonsäuren oder Hydrolyse von Estern. Weitere erfindungsgemäße Katalysatoren sind immobilisierte Enzyme.

Im Falle der erfindungsgemäßen Matrices für die Festphasensynthese, die bisher noch nicht die große technische Bedeutung wie die Adsorption und die heterogene Katalyse hat, sind als Beispiele für immobilisierte Reaktanden oxidier- bzw. reduzierbare Substanzen wie die Hydrochinone bzw. die entsprechenden Chinone zu nennen, die die Komponenten der flüssigen Phase reduzieren oder oxidieren können und deshalb auch als "Elektronenaustauscher" bezeichnet werden.

Zusätzlich wird noch besonders auf die nachfolgenden Literaturstellen verwiesen:

a) Soweit die adsorptive Stofftrennung die Trennung und Reinigung von biologischen Substanzen und insbesondere von Proteinen betrifft, wird auf J.-C. Janson und L. Ryden verwiesen (J.-C. Janson, L. Ryden, Herausg; "Protein Purification", VCH Publishers Inc., New York, VCH Verlagsgesellschaft mbH, Weinheim, VCH Publishers Ltd., Cambridge (19989)), wo theoretische und praktische Grundlagen sowie die Anwendung von hydrophoben Liganden, thiophilen Liganden und Farbstoffliganden, sowie der Einsatz der IMAC ("immobilized metal affinity chromatography"), der kovalenten Chromatographie und der Affinitätschromatographie beschrieben werden. Zum Stand der Technik auf dem Gebiet der Ionenaustauscher- und Affinitätschromatographie gibt die US-PS 4 663 163 einen Überblick. Ein weiterer wichtiger Anwendungsfall der erfindungsgemäßen Adsorbentien, nämlich die Bindung von Schwermetallen durch immobilisierte Komplexbildner, ist beispielsweise bei S. K Sahni, J. Reedijk ("Coordination chemistry of chelating resins and ion exchangers", Coordination Chemistry Reviews 59, 1-139 (1984)) zusammenfassend referiert.

b) Als Übersichtsliteratur für die heterogene Katalyse durch immobilisierte Enzyme ist I. Chibata; "Immobilized Enzymes" (Kodansha Ltd. Tokio, John Wiley & Sons, New York-London-Sodney-Toronto, 1978) zu nennen. Ein Beispiel für die erfindungsgemäße Anwendung ist die Katalyse mit Ionenaustauschern in der H-Form (siehe Beispiel 9) und mit einem immobilisierten Enzym (siehe Beispiel 7).

c) Geeignete Literaturhinweise für das Gebiet der Festphasensynthese und der nichtenzymatischen Katalyse finden sich bei N.K. Mathur, R.E. Williams ("Organic Syntheses using polymeric supports, polymeric reagents and polymeric catalyst", J. Macromol. Sci.-Rev. Macromol. Chem., C15(1), 117-142 (1976)).

Eine Ausgestaltung der Erfindung, bei der synergistische Effekte ionischer Gruppen ausgenutzt werden, besteht darin, daß die elektrostatische Abstoßung gleichsinnig geladener Komponenten zur Erhöhung der Spezifität der Wechselwirkung ausgenutzt wird. Dies ist dann von Bedeutung, wenn die die Wechselwirkung hervorrufenden funktionellen Gruppen und/oder Liganden oder Reaktanden diese Wechselwirkung mit mehreren Komponenten der flüssigen Phase ausüben können, jedoch nur eine davon bevorzugt werden soll. Unterscheiden sich diese Komponenten in ihrer elektrischen Ladung, so können ionische Gruppen, die die gleiche Ladung aufweisen wie die Komponente, deren Wechselwirkung vermieden werden soll, deren Teilnahme an dem Prozeß durch elektrostatische Abstoßung verhindern oder einschränken. Ein Beispiel dafür sind Adsorbentien, die eine Kombination von Farbstoffliganden mit sauren Gruppen (Carboxyl- oder Sulfonsäuregruppen) aufweist, wodurch die relativ schwache negative Ladung der Farbstoffliganden verstärkt wird und bestimmte Enzyme, die grundsätzlich zur Wechselwirkung mit dem Liganden befähigt sind, jedoch bei dem angewandten pH-Wert ebenfalls eine negative Ladung aufweisen, stärker abgestoßen und daher in geringem Ausmaß gebunden werden.

Die OH-haltigen Gruppen werden dann bevorzugt, wenn einerseits eine elektroneutrale, durch Wasser solvatisierbare Matrix erforderlich ist, d.h. wenn eine ionische Adsorption den beabsichtigten Prozeß stören wurde, oder wenn über Wasserstoffbrücken eine gewisse "Vernetzung" erreicht werden soll. In einer Ausführungsform der Erfindung werden sie zur Herabsetzung der Ligandendichte bei Ionenaustauschern zur Trennung von Proteinen eingesetzt. Es wurde nämlich überraschenderweise festgestellt, daß bei der Bindung von Proteinen aus Lösungen, die außerdem noch Peptide enthalten, die Coadsorption der Peptide durch eine verminderte Dichte an ionischen Gruppen herabgesetzt werden kann. Dies ist nicht nur im Interesse des zu erreichenden Reinigungseffektes bedeutsam, sondern steigert auch die Bindungskapazität für die Proteine aus peptidhaltigen Lösungen. In dieser Ausgestaltung der Erfindung wird ein molares Verhältnis von ionischen Gruppen zu nichtionischen Gruppen im Bereich von 1:3 bis 3:1 angewandt, wobei der Bereich von 1:1 bis 1:2 bevorzugt wird.

Eine Herabsetzung der Dichte funktioneller Gruppen und/oder Liganden oder Reaktanden wird in einer Ausführungsform der Erfindung auch dann durchgeführt, wenn diese eine ausgeprägte Assoziationstendenz aufweisen. Dies ist beispielsweise bei Adsorbentien mit hydrophoben Liganden, thiophilen Liganden und Farbstoffliganden der Fall. In diesen Fällen würde eine zu hohe Ligandendichte zur gegenseitigen Blokkierung der assoziierten Liganden führen, so daß sie für die Wechselwirkung mit den Komponenten nicht verfügbar sind. In den Fällen, in denen dadurch keine unerwünschte ionische Adsorption bewirkt werden kann, werden zur Herabsetzung der Ligandendichte ionische Gruppen bevorzugt, die durch ihre gegenseitige Abstoßung der Assoziationstendenz entgegenwirken. Die Herabsetzung der Ligandendichte kann noch unterstützt werden durch eine Vernetzung des aufgepfropften Polymeren, wodurch die Kettenbeweglichkeit herabgesetzt wird, so daß die Wahscheinlichkeit des Zusammentreffens der assoziierten Liganden herabgesetzt wird.

**Der Träger**

Die erfindungsgemäße poröse Matrix hat einen nichtpartikulären Aufbau und stellt somit im Unterschied zu partikulären Matrices (diese sind meist eine Schüttung von Einzelpartikeln) ein zusammenhängendes Gebilde dar, bei dem der konvektive Stofftransport ausschließlich durch die Matrixporen erfolgen kann, in denen sich die zur Wechselwirkung befähigten Zentren befinden. Es ist so kein Bypass-Strom an den Poren vorbei möglich. Ein zusammenhängendes Gebilde, in das eine partikuläre Matrix eingebettet ist, wurde diese Anforderungen z.B. nicht erfüllen.

Erfindungsgemäß weist die Matrix einen Träger mit Schwammstruktur auf. Diese Struktur hat besondere Anwendungsvorteile, denn es wurde überraschenderweise festgestellt, daß der Effekt der Diffusionslimitierung bei schwammartigen Strukturen besonders ausgeprägt unterdrückt wird. Unter "schwammartig" werden Strukturen verstanden, die aus einem zusammenhängenden räumlichen System von Poren bestehen und daher im Verhältnis zu ihrem strömungswiderstand eine besonders hohe spezifische Oberfläche aufweisen. Langfaserige poröse Strukturen, wie z.B. Vliese oder die leicht in grösseren Schichtdicken herstellbaren Filze weisen zwar wegen ihrer niedrigen Herstellkosten und ihrer meist hohen mechanischen Festigkeit scheinbare Vorteile auf, ermöglichen aber allenfalls eine hohe unlimitierte, keinesfalls jedoch eine hohe transportlimitierte Kenngröße.

Als Träger der erfindungsgemäßen Matrix können je nach beabsichtigter Schichtdicke offenporige Schäume oder mikroporöse Membranen eingesetzt werden.

Im Falle der offenporigen Schäume werden die sogenannten Hartschäume bevorzugt, die technisch meist auf Polyurethanbasis hergestellt werden und die sehr hohe Schichtdicken ermöglichen, etwa im Bereich zwischen 0.5 und 100 mm, vorzugsweise zwischen 5 und 50 mm. Offenzellige Hartschaumstoffe können beispielsweise durch Verschäumen von MDI (4,4'-Diisocynato-diphenylmethan) und einem Polyol mit dem bei der Reaktion entstehenden Kohlendioxid hergestellt werden. Die Herstellung praktisch völlig offenporiger Schäume ist beispielsweise bei R. Vieweg, A. Höchtlen ("Kunststoff-Handbuch", Band VII, Polyurethane, Carl Hanser Verlag, München 1966) beschrieben. Es sind offenzellige Schäume mit einem Porenvolumen von 80 bis 98 % einsetzbar, was etwa einem Raumgewicht von 20 bis 200 kg/m$^3$ entspricht. Bevorzugt werden Schäume mit einem Raumgewicht von 50 bis 100 kg/m$^3$.

Mikroporöse Membranen (nachfolgend kurz: "Membranen") kommen für die Herstellung besonders dünner Matrices in Frage, sofern sie die erforderliche Schwammstruktur aufweisen. Die typische Schichtdikke der verwendbaren mikroporösen Membranen liegt im Bereich zwischen 50 und 500 $\mu$m, vorzugsweise zwischen 100 und 250 $\mu$m. Es sind mittlere Porengrößen im Bereich zwischen 0.05 und 15 $\mu$m einsetzbar, vorzugsweise 0.4 bis 10 $\mu$m. Sie werden überwiegend nach sogenannten Phaseninversionsverfahren aus Polymerlösungen hergestellt, wobei man entweder Lösungsmittel verdunstet oder eine Fällung in einem Fällmittel durchführt. Derartige Membranen können eben oder auch zylindrisch ausgebildet sein. Zylindrische Membranen werden je nach der Größe des Zylinderdurchmessers als Membranhohlfasern, Membrankapillaren oder Membranschläuche bezeichnet, wobei diese Begriffe in der angegebenen Reihenfolge für Zylinderaußendurchmesser von etwa 0.2 bis 1, 1 bis 5 und 5 bis 25 mm gebraucht werden. Ebene Membranen können auch in Form von Stapeln eingesetzt werden, also mehrere Membranen hintereinander zur Erhöhung der Schichtdicke. Dies bietet sich insbesondere dann an, wenn kein Schaumstoff der gewünschten Porengröße und/oder aus dem gewünschten Werkstoff zur Verfügung steht.

Eine Ausführungsform der erfindungsgemäßen Matrix besteht in deren Annäherung an die Geometrie herkömmlicher Säulen, wobei die für erfindungsgemäße Matrices typische günstige Kinetik erhalten bleibt. Man erreicht dies mit relativ großen Schichtdicken, also unter Einsatz von Membranstapeln bzw. auch von geschäumten Materialien, wenn als Träger ein offenporiger Schaum eingesetzt wird.

Große Schichtdicken können auch im Fall der Adsorption zur Erreichung einer hohen Gesamtbindungskapazität einer Einheit erforderlich sein, z.B. wenn Medien mit einer relatativ hohen Konzentration an Zielsubstanz aufzuarbeiten sind, oder für die Anwendung der Elutionschromatographie, also der Chromatographie im engeren Sinne. Dabei wird das Adsorbens nur zu einem geringen Teil seiner Kapazität, etwa in der Größenordnung von 10 %, mit dem zu trennenden Substanzgemisch beladen und mit einem geeigneten Elutionsmedium in Einzelpeaks aufgetrennt. Dieses analytisch wichtige Trennverfahren kommt derzeit aus wirtschaftlichen Gründen technisch nur vereinzelt für die Reinigung extrem kostspieliger Substanzen zur Anwendung, wenn kein anderes Verfahren zum Ziel führt. Es ist ein besonderer Aspekt der erfindungsgemäß eingesetzten Adsorbentien, daß sie auf Grund ihrer hohen dynamischen Kapazität und der dadurch ermöglichten kurzen Zykluszeiten zu einer wesentlichen Verbilligung der Elutionschromatographie und damit zur Erweiterung des Anwendungsbereichs dieses extrem hochauflösenden Trennverfahrens beitragen.

Extrem niedrige Schichtdicken der Matrices, die durch die Verwendung mikroporöser Membranen als Träger erreicht werden, können im Fall der Adsorbentien dann eingesetzt werden, wenn die zu adsorbierende Komponente in der flüssigen Phase in sehr geringer Konzentration in Relation zur Bindungskapazität der Matrix vorliegt, so daß bezogen auf die Flächeneinheit der Matrix bis zur Erschöpfung der Bindungskapazität ein großes Volumen der flüssigen Phase verarbeitet werden kann. Ebenfalls geringe Schichtdicken der Matrix sind dann erforderlich, wenn eine besonders niedrige Verweilzeit der Komponenten innerhalb der Poren der Matrix erreicht werden soll. Dies ist dann der Fall, wenn die unterschiedliche Kinetik verschiedener möglicher Wechselwirkungen zur Bevorzugung der schneller ablaufenden Vorgänge ausgenutzt werden soll. Dies ist bei den erfindungsgemäßen Matrices deshalb möglich, weil durch Ausschaltung der Diffusionslimitierung die Kinetik des Elementarvorgangs der Wechselwirkung für den Gesamtprozeß geschwindigkeitsbestimmend ist. Die Ausnutzung dieses Effektes ist Gegenstand einer Parallelanmeldung.

Einsetzbare Membranmaterialien für den Träger sind sowohl halbsynthetische Polymere wie z.B. Cellulosenitrat, Celluloseacetat und Cellulosehydrat, als auch vollsynthetische Polymere wie z.B. Polyamide, z.B. Nylon 6 und Nylon 6,6, Polysulfon, Polyäthersulfon, Polyvinylidenfluorid, Polyacrylnitril, verschiedenen Copolymere, z.B. PVC-Acrylnitril-Copolymer, Polyvinylidenfluorid, Polypropylen und Tetrafluorethylen.

Im Einzelfall bevorzugte Membranmaterialien richten sich nach den Bedürfnissen des vorgesehenen Anwendungsfalls, wobei sowohl die chemische und thermische Beanspruchung unter Betriebs- und Reinigungsbedingungen eine Rolle spielen, als auch die angestrebte hydraulische Permeabilität. Die Auswahlmöglichkeiten sind dabei insofern eingeschränkt, als im grobporigen Bereich (d.h. oberhalb einer nominellen Porengröße von etwa 5 $\mu$m), nur Membranen aus den erwähnten halbsynthetischen Cellulosederivaten zu Verfügung stehen, deren chemische Beständigkeit insbesondere gegenüber extremen pH-Werten Einschränkungen aufweist. Wenn grobporige Ausgangsmembranen verwendet werden sollen, wird aus dieser Gruppe Cellulosehydrat bevorzugt, wobei Membranen aus vernetztem Cellulosehydrat besonders bevorzugt sind. Aber auch unvernetzte Cellulosehydratmembranen können mit Erfolg als Träger eingesetzt werden.

Die hydraulische Permeabilität der Membranen wird durch die Bepfropfung beeinträchtigt und kann auf einen Bruchteil des Ausgangswertes absinken, so daß eine hohe Permeabilität der Matrix nur mit einem besonders grobporigen Träger erreichbar ist. Hiefür wird der nominelle Porengrößenbereich zwischen 3 und 10 $\mu$m bevorzugt, besonders bevorzugt der Bereich um 5 $\mu$m. Eine besondere Bedeutung haben erfindungsgemäße Matrices hoher hydraulischer Permeabilität dann, wenn die erwähnten kinetischen Unterschiede verschiedener möglicher Wechselwikrungen zur Lenkung des Prozesses ausgenutzt werden sollen. Dabei ermöglicht es eine hohe Permeabilität der Matrix, die erforderlichen kurzen Verweilzeiten ohne Anwendung extremer hydraulischer Druckunterschiede zu erreichen.

In manchen Anwendungsfällen der erfindungsgemäßen Matrices sind Membranen höchster chemischer Beständigkeit erforderlich. Beispiele dafür sind Membranen mit chelatbildenden Liganden zur Schwermetalladsorption, die mit starken Säuren (0.1 bis 1 N Mineralsäuren) regeneriert werden müssen und Katalysatoren mit aggressiv wirkenden funktionellen Gruppen. So werden stark saure Katalysatoren, bei deren Herstellung eine säureempfindliche Basismembrane wie z.B. aus Polyamid verwendet wurde, bei höheren Temperaturen schnell durch die Einwirkung der immobilisierten Sulfonsäuregruppen zerstört. Die bevorzugten Membranpolymere für diese Fälle sind daher Polyvinylidenfluorid, Polysulfon und Polypropylen.

**Die aufgepfropfte Polymerschicht**

Die erfindungsgemäße Matrix weist auf dem Träger eine aufgepfropfte Polymerschicht auf. Wesentlich ist dabei, daß die Pfropfung im wesentlichen ausschließlich auf der inneren und äußeren Oberfläche des Trägers erfolgt nicht jedoch in der inneren Masse (Bulk) des Trägers. Dadurch ist es möglich, eine hohe Dichte des die funktionellen Gruppen Liganden bzw. Reaktanden tragenden Pfropfpolymeren an der Oberfläche zu erreichen, wo die Zugänglichkeit durch die Moleküle der Komponente gewährleistet ist. Wird hingegen eines der üblichen Pfropfverfahren ohne besondere Maßnahmen zur Vermeidung der Pfropfung im Bulk des Trägers angewandt, so werden dessen chemische und mechanischen Eigenschaften stark beeinträchtigt. Insbesondere bei der Einführung von ionischen Gruppen wird dabei die Wasserquellbarkeit des Trägers drastisch erhöht, bzw. dieser kann im Extremfall sogar wasserlöslich werden. Bei diesen Pfropfverfahren muß demnach der Pfropfgrad unterhalb jener Grenze gehalten werden, wo dieser Effekt zur Unbrauchbarkeit des Produktes führt und dementsprechend ist auch das an der Oberfläche für die Bindung zur Verfügung stehende Pfropfpolymer in seiner Dichte beschränkt.

In bezug auf Träger auf Cellulosebasis wurde überraschenderweise festgestellt, daß sich das Quellverhalten erfindungsgemäßer Membranionenaustauscher auf Cellulosebasis insofern von denen nach dem Stand der Technik unterscheidet, als keinerlei Zunahme der Wasserquellbarkeit gegenüber den ungepfropften Cellulosehydrat-Ausgangsmembranen auftritt. Die Beständigkeit gegenüber starken Alkalien ist sogar noch erhöht, so daß es möglich ist, derartige Produkte durch eine mehrstündige Behandlung mit 2 N NaOH zu entpyrogenisieren.

Die aufgepfropfte Polymerschicht weist erfindungsgemäß eine ausreichende Anzahl von Monomereinheiten mit durch die flüssige Phase solvatisierbaren funktionellen Gruppen auf. Im nicht aufgepfropften Zustand, also ohne Bindung an eine feste Phase, wäre das Polymer, wenn es unvernetzt ist, in der flüssigen Phase entweder vollständig löslich oder es würde, sofern es vernetzt ist, im Kontakt mit der flüssigen Phase ein hochgradig gequollenes Gel ohne jegliche mechanische Festigkeit darstellen.

In einer Ausführungsform der Erfindung trägt die aufgepfropfte Polymerschicht eine einzige Art von funktionellen Gruppen. Diese Ausführungsform wird dann bevorzugt, wenn die für die beabsichtigten Wechselwirkungen erforderlichen funktionellen Gruppen die Solvatisierung durch die beabsichtigte flüssige Phase bewirken, und sie außerdem in möglichst hoher Dichte vorhanden sein sollen. Diese Voraussetzungen sind vorwiegend bei Ionenaustauschern für die adsorptive Stofftrennung und die heterogene Katalyse sowie bei Chelataustauschern für IMAC oder die Schwermetallbindung gegeben.

In anderen Ausführungsformen der Erfindung weist die aufgepfropfte Polymerschicht zwei oder mehrere, vorzugsweise nicht mehr als drei unterschiedliche funktionelle Gruppen auf, wobei ihre Verteilung innerhalb der aufgepfropften Polymerketten vorzugsweise statistisch ist. Das heißt mit anderen Worten, daß die aufgepfropfte Polymerschicht nicht aus Einzelketten mit einheitlichen funktionellen Gruppen oder Ketten mit größeren Anhäufungen identischer funktioneller Gruppen nach Art von Blockcopolymeren besteht.

In einer dieser letztgenannten Ausführungsformen ist eine Art von Monomereinheiten Träger der funktionellen Gruppen zur Solvatisierungen der Polymerschicht und eine oder mehrere andere Arten von Monomereinheiten Träger der funktionellen Gruppen und/oder Liganden oder Reaktanden zum Hervorrufen der Wechselwirkung. Diese Ausführungsform wird dann bevorzugt, wenn die funktionellen Gruppen und/oder Liganden oder Reaktanden zum Hervorrufen der Wechselwirkung entweder von sich aus nicht die Solvatisierung der Polymerschicht durch die flüssigen Phasen bewirken und/oder deren Dichte herabgesetzt werden soll.

Im Falle von polaren, insbesondere von wäßrigen flüssigen Phasen werden als solvatisierbare funktionelle Gruppen ionische Gruppen oder solche Gruppen bevorzugt, die eine oder mehrere Hydroxylgruppen enthalten. Unter den ionischen Gruppen werden die stark sauren oder stark basischen, also Sulfonsäure- bzw. quaternäre Ammoniumgruppen besonderes bevorzugt, weil sie über einen weiten pH-Bereich einsetzbar sind. Insbesondere werden ionische Gruppen dann eingesetzt, wenn sie einen synergistischen Effekt in bezug auf die beabsichtigte Wechselwirkung ausüben können. Dies ist bei einer Ausführungsform der Erfindung der Fall, bei der quarternäre Ammoniumgruppen und zur kovalenten Bindung von Proteinen befähigte Gruppen wie z.B. Epoxidgruppen nebeneinander vorhanden sind. Dadurch ist es möglich, daß das Protein zuerst in einem rasch ablaufenden Vorgang ionisch gebunden und damit auf der Matrix angereichert und anschliessend in einer Zeitreaktion über die Expoxidgruppen konvalent gebunden wird. Auf diese Weise können beispielsweise Enzyme aber auch andere Liganden zur Herstellung erfindungsgemäßer Matrices gebunden werden.

In einer Ausführungsform der Erfindung, die Matrices für den Einsatz mit unpolaren flüssigen Phasen betrifft, werden als die Solvatation bewirkende funktionelle Gruppen dieselben Alkyl- und Phenylreste eingesetzt, wie sie im Zusammenhang mit der hydrophoben Chromatographie genannt worden sind. Ihre Funktion ist jedoch hier eine andere, weil sie in erster Linie mit dem Lösungsmittel und nicht mit der Komponente in Wechselwirkung treten. Derartige Matrices kommen in erster Linie für die heterogene Katalyse oder die Festphasensynthese in nichtwäßrigen Systemen in Frage. Die die Wechselwirkung hervorrufenden funktionellen Gruppen oder Reaktanden können dabei je nach Verwendungszeck beliebig gewählt werden.

Verfahren zur Durchführung der Oberflächenpfropfung sind nicht eigentlicher Gegenstand der Erfindung. Einzelheiten hierzu sind in drei vorangegangenen Anmeldungen beschrieben, die hiermit zum Teil der Offenbarung erklärt werden:

1. Euro/PCT-Anmeldung mit der Veröffentlichungsnummer WO 91/03310; Aktenzeichen EPA 90913 482.7 (Arbeitsbezeichnung "Pfropfung nach Chlorierung")

2. Euro/PCT-Anmeldung mit der Veröffentlichungsnummer WO 71/03506; (Arbeitsbezeichnung "Pfropfung mit Tetra")

3. Deutsche Patentanmeldung P 41 07 171.9 (Arbeitsbezeichnung "Pfropfung nach Filmbildung")

Die beiden erstgenannten Anmeldungen betreffen die Pfropfung auf bestimmten stickstoffhaltigen Materialien, darunter Polyamiden, während das letztgenannte Verfahren praktisch keine Einschränkung auf ein bestimmtes Membranmaterial aufweist und daher besonders bevorzugt wird. Das erste Verfahren beruht darauf, daß an dem stickstoffhaltigen Polymer ein Wasserstoffatom am Stickstoff durch ein Chloratom ersetzt wird, wodurch unter der Einwirkung eines Reduktionsmittels am Stickstoff ein Radikal gebildet wird, was in Gegenwart von geeigneten Monomeren zur Pfropfung am Stickstoff führt. Das zweite Verfahren wird ebenfalls unter Mitwirkung eines Reduktionsmittels ausgeführt, doch unterbleibt in diesem Fall die Chlorierung des N-haltigen Polymeren, und stattdessen wird während der Pfropfung Tetrachlorkohlenstoff oder bestimmte andere organische Halogenverbindungen zugesetzt, worauf nach einem unbekannten Mechanismus ebenfalls eine Pfropfung erfolgt. Durch besondere Maßnahmen wird bei den beiden Verfahren erreicht, daß eine Pfropfung im Bulk des Polymeren weitgehend unterdrückt wird. Bei dem dritten Verfahren sind beliebige Polymere einsetzbar, und es wird zunächst beispielswweise eine dünne Schicht eines N-chlorierten Polyamids aufgebracht, worauf die Pfropfung analog wie bei den anderen Verfahren in Gegenwart eines Reduktionsmittels erfolgt. Da das Trägerpolymer unter diesen Bedingungen in der Regel keine Tendenz zur Pfropfung aufweist, ist es auf diese Weise am sichersten möglich, die Bulk-Pfropfung zu vermeiden und eine reine Oberflächenpfropfung zu erreichen.

Der entscheidende Vorteil der oberflächengepfropften Polymerschicht als Sitz der funktionellen Gruppen bzw. Liganden gegenüber einer direkten Fixierung der funktionellen Gruppen bzw. Liganden auf der Oberfläche des Trägers besteht darin, daß dadurch nicht nur die Oberfläche des Trägers für die Wechselwirkung verfügbar wird, sondern das Volumen, das gegeben ist als Produkt von innerer Oberfläche des Trägers und der linearen Ausdehnung der aufgepfropften Polymerkette unter den Bedingungen der Wechselwirkung. Demzufolge wird beispielsweise im Falle der Adsorption die maximale statische Kapazität nicht nach Anlagerung einer monomolekularen Schicht der Zielsubstanz auf der inneren Oberfläche erreicht, sondern bei einem Vielfachen davon.

Gegenüber dem in der US-PS 4 639 513 (Hou) beschriebenen Verfahren der Aufbringung eines ionischen Polymeren auf eine Trägermatrix über Epoxidgruppen dieser Matrix bietet die erfindungsgemäße Oberflächenpfropfung den Vorteil, daß ein weitgehend unvernetztes Propfpolymer erhalten werden kann, aber auch eine Vernetzung durch ein bifunktionelles Comonomer möglich ist, wenn beispielsweise ein Molekularsiebeffekt erreicht werden soll.

Es besteht dabei völlige Freiheit bei der Wahl des Vernetzungsgrades, weil eine Vernetzung der aufgepfropften Polymerschicht weder für die Gewährleistung der mechanischen Festigkeit der Matrix noch für eine ausreichende Fixierung auf dem Träger erforderlich ist, wie dies für Matrices nach dem Stand der Technik zutrifft. Die mechanische Festigkeit wird ausschließlich durch die des Trägers bestimmt und diese wird wie erwähnt durch das Prinzip der Oberflächenpfropfung nicht beeinträchtigt.

Die meßtechnisch unmittelbar zugänglichen Größen zur Charakterisierung der aufgepfropften Polymerschicht sind der Pfropfgrad, also die Massenzunahme im Trockenzustand, bezogen auf die Masse des Trägers und die Anbnahme der hydraulischen Permeabilität gegenüber der des Trägers. Der Pfropfgrad wird bei nichtporösen Verstärkungsmaterialien enthaltenden Trägern, also beispielsweise Vliesen oder Geweben im Falle von Membranen, auf die Masse des Trägers abzüglich dieser nichtporösen Anteile bezogen. Folgt auf die Pfropfung eine nachträgliche Einführung von funktionellen Gruppen, wird der Berechnung des Pfropfgrades die Massenzunahme nach Einführung dieser Gruppen zugrundegelegt. Nachträglich eingeführte Liganden oder Reaktanden hingegen werden bei der Berechnung nicht berücksichtigt.

Der Pfropfgrad ist insofern ein wesentliches Kriterium der erfindungsgemäßen Matrix, weil er ein Maß darstellt für die Menge an aktiven Zentren, also funktionelle Gruppen und/oder Liganden oder Reaktanden, die auf der Matrix untergebracht werden können. Es ist jedoch nicht grundsätzlich ein möglichst hoher Pfropfgrad anzustreben, wobei es bei den bevorzugten Pfropfverfahren keinerlei Schwierigkeiten bereitet, sehr viel höhere Pfropfgrade zu erreichen, als erforderlich. Ein zu hoher Pfropfgrad ist dabei im allgemeinen nicht nur von einer zu starken Minderung der hydraulischen Permeabilität begleitet, sondern auch von einer Abnahme sowohl der unlimitierten als auch der transportlimitierten Kenngröße.

Der zur Erreichung bestimmter Eigenschaften der Matrix erforderliche Pfropfgrad hängt davon ab, inwieweit von dem angewandten Pfropfverfahren die Forderung nach einer ausschließlichen Oberflächenpfropfung erfüllt wird. Von den erfindungsgemäß bevorzugten Pfropfverfahren trifft dies bei der "Pfropfung nach Filmbildung" am weitestgehenden zu. Bei Anwendung dieses oder in dieser Richtung ähnlich wirksamer Verfahren beträgt der Pfropfgrad erfindungsgemäß zwischen 0,5 und 25 %, vorzugsweise zwischen 1 und 10 %. Bei den beiden anderen, vorwiegend bei Polyamiden und verwandten Trägerpolymeren angewandten Pfropfverfahren sind die erforderlichen Pfropfgrade etwas höher, weil sie, wenn auch in geringfügigem Ausmaß, von einer Pfropfung im Bulk des Trägers begleitet sind. Für diese Verfahren liegt der erfindungsgemäße Bereich der Pfropfgrade zwischen 5 und 75 %, vorzugsweise zwischen 10 und 50 %.

Während der Pfropfgrad das Produkt aus Kettendichte und Kettenlänge des aufgepfropften Polymeren darstellt, läßt die Abnahme der hydraulischen Permeabilität Rückschlüsse auf die Dicke der aufgepfropften Polymerschicht zu. Bei gleichem Pfropfgrad und gleicher Solvatation kann also die Permeabilitätsminderung in weiten Grenzen schwanken, je nachdem, ob es sich um ein kurzkettiges oder ein langkettiges Polymer handelt. Während ein kurzkettiges Polymer nur eine geringe Permeabilitätsminderung bewirkt, kann eine hohe Kettendichte dazu führen, daß zwischen den Polymerketten zu wenig Raum für den Zutritt hochmolekularer Komponenten verbleibt, was eine niedrige unlimitierte Kenngröße zur Folge hat. Beim Einsatz einer Matrix mit einer großen Kettenlänge der aufgepfropften Polymerschicht kann zwar die Permeabilitätsminderung durch Verwendung eines entsprechend grobporigen Trägers in Grenzen gehalten werden, doch kann in diesem Fall der Stofftransport insbesondere hochmolekularer Komponenten in das Innere dieser Schicht limitierend werden. Die Folge dieser Diffusionslimitierung ist eine Verminderung der transportlimitierten Kenngröße.

Weitere Unterschiede in den Anforderungen an die aufgepfropfte Polymerschicht in bezug auf hoch oder niedermolekulare Komponenten betreffen die Vernetzung und die Assoziation der Polymerketten, wobei die Assoziation des Polymeren beispielsweise über H-Brücken oder hydrophobe Wechselwirkungen eine ähnliche Auswirkung hat, wie eine Vernetzung. In beiden Fällen wird der Quellgrad des Polymeren herabgesetzt, die Schichtdicke bei den gegebenem Pfropfgrad wird geringer, und die "Maschen" zwischen den Polymerketten werden enger. Je kleiner die Komponenten sind, die mit der Matrix wechselwirken sollen, umso mehr kann von der Vernetzung oder zur Assoziation neigenden Gruppen Gebrauch gemacht werden, um trotz eines hohen Pfropfgrades und der dadurch erreichten hohen unlimitierten Kenngröße eine geringe Permeabilitätsabnahme zu erreichen.

Wenn im folgenden das Volumen der aufgepfropften Polymerschicht zur Charakterisierung der erfindungsgemäßen Matrix herangezogen wird, sind dabei Annahmen erforderlich, die nicht der Realität entsprechen. Dabei wird von dem Modell ausgegangen, daß der Träger zylinderische Poren aufweist, die bei der Pfropfung konzentrisch verengt werden. Die Abweichung von der Realität betrifft dabei nicht nur die Porengeometrie. Es ist auch anzunehmen, daß die aufgepfropfte Polymerschicht, besonders dann, wenn sie unvernetzt ist, selbst eine gewisse Durchströmbarkeit aufweist, die bei dem Modell nicht berücksichtigt wird. Aus Gründen der Anschaulichkeit wirde diese Betrachtungsweise dennoch für zweckmäßig gehalten.

Bei Anwendung des Hagen-Poiseuille'schen Gesetzes auf obiges Modell ergibt sich das Verhältnis der Porendurchmesser des ungepfropften Trägers und der gepfropften Matrix aus der vierten Wurzel des Verhältnisses der hydraulischen Permeabilitäten. Das Verhältnis des Polymervolumens zum Porenvolumen des ungepfropften Trägers ist dann:

$$Vp/Vt \ = \ 1 - (Pm/Pt)^{\frac{1}{4}}$$

Vp      = Volumen der aufgepfropften Polymerschicht
Vt      = Porenvolumen des Trägers
Pm      = hydraulische Permeabilität der Matrix
Pt      = hydraulische Permeabilität des Trägers

Die hydraulische Permeabilität der erfindungsgemäßen Matrix kann je nach Anwendungsfall in sehr weiten Grenzen gewählt werden. Sie kann sowohl nur geringfügig unter der des verwendetetn Trägers liegen, nämlich um etwa 5 %, sie kann aber auch nur etwa ein Tausendstel der Permeabilität des Trägers betragen. Daraus ergibt sich nach obiger Beziehung für das Volumen der aufgepfropften Polymerschicht ein Bereich zwischen 2,5 und 97 %, bezogen auf das Porenvolumen des verwendeten Trägers. Ein besonders bevorzugter Bereich liegt zwischen 20 und 90 %.

Das Volumen des gequollenen Polymeren ist umso stärker von der Art der flüssigen Phase abhängig, je geringer die Vernetzung ist. So steigt im Falle von erfindungsgemäßen Adsorbentien auf der Basis von Ionenaustauschern die hydraulische Permeabilität für wäßrige Elektrolytlösung stark mit steigender Elektrolytkonzentration an, was auf die herabgesetzte Quellung der aufgepfropften Polymerschicht zurückzuführen ist. Die angegebenen Werte für das Volumen des gequollenen Polymeren gelten in Verbindung mit der für die Anwendung der Matrix vorgesehenen flüssigen Phase.

Der Einfluß der Quellung auf die Permeabilitätsabnahme wird besonders deutlich, wenn nach einem bevorzugten erfindungsgemäßen Herstellungsverfahren die die Solvatisierbarkeit des Polymeren bewirkenden funktionellen Gruppen erst nach der Pfropfung in das Polymer eingeführt werden. In diesem Fall ist die Permeabilitätsabnahme vor der Einführung der funktionellen Gruppen sehr viel niedriger. Aus der hydraulischen Permeabilität vor und nach der Einführung der funktionellen Gruppen läßt sich unter Anwendung obiger Beziehung näherungweise der Quellgrad der aufgepfropften Polymerschicht in der flüssigen Phase bestimmen, wobei unter Quellgrad das Verhältnis des Volumens im gequollenen Zustand zum Volumen im ungequollenen Zustand verstanden wird. Der Quellgrad des aufgepfropften Polymeren liegt erfindungsgemäß zwischen 1,5 und 500, wobei der Bereich zwischen 10 und 100 besonders bevorzugt wird.

Das Volumen des aufgepfropften Polymeren wird nicht nur durch den Quellgrad im Kontakt mit der flüssigen Phase beeinflußt, sondern in bestimmten Fällen auch durch die Wechselwirkung mit den Komponenten. So kann nach einem nicht vollständig verstandenen Mechanismus im Falle von erfindungsgemäßen Adsorbentien auf Ionenaustauscherbasis mit einer unvernetzt aufgepfropften Polymerschicht in Abhängigkeit von den gewählten Pfropfbedingungen die hydraulische Permeabilität nach der Beladung mit Proteinen sowohl zuals auch abnehmen. In einer Ausführungsform der Erfindung werden die empirisch ermittelten Pfropfbedingungen angewandt, die zu Adsorbentien führen, deren hydraulische Permeabilität bei der Beladung mit dem Adsorbenden abnimmt, weil sich dadurch ein "eingebauter Selbstregulierungseffekt" erreichen läßt. Der Bereich dieser Permeabilitätsabnahme beträgt zwischen 5 und 60 % der Permeabilität im unbeladenen Zustand, wobei der Bereich zwischen 10 und 40 % besonders bevorzugt wird.

Dieser Effekt ist deshalb vorteilhaft, weil er einen entscheidenden Beitrag zu dem anzustrebenden scharfen Durchbruch der Zielsubstanz leistet. Ein unscharfer Durchbruch der Zielsubstanz, also ein allmähliches Ansteigen ihrer Konzentration im Ablauf des Adsorbens vor der Erschöpfung der statischen Bindungskapazität, ist dabei gleichbedeutend mit einer niedrigen dynamischen Bindungskapazität. Der Hintergrund ist dabei der, daß es unter technischen Bedingungen auch bei exakter Kontrolle der Herstellparameter sowohl bei der Fertigung des Trägers als auch bei den nachfolgenden Schritten nicht möglich ist, ein Adsorbens mit absolut gleichmäßiger Bindungskapazität und Permeabilität herzustellen. Darüber hinaus ist es auch nicht möglich, technische Module zum Betrieb von Adsorbern herzustellen, die über die Gesamtfläche einen absolut gleichmäßigen Differenzdruck aufweisen. Alle drei genannten Voraussetzungen müßten jedoch gegeben sein, um die dynamische Kapazität der Matrices voll nutzbar zu machen. Der erwähnte Selbstregulierungseffekt besteht darin, daß die lokal bereits stärker beladenen Teile der Matrices weniger zur Gesamtfiltrationsleistung beitragen als der Rest und der lokale Durchbruch des Zielproteins somit hinausgezögert wird.

Das Ausmaß der Durchflußreduzierung des Adsorbers bei der Beladung ist umso größer, je feiner die Ausgangsporosität des Trägers ist. Davon wird in einer weiteren Ausführungsform der Erfindung Gebrauch gemacht, indem ein Träger mit einem Gradienten der Porosität eingesetzt wird, wobei die Beladung mit dem Adsorbenden in der Weise erfolgt, daß der feinerporige Bereich zuletzt durchströmt wird. Im Falle der geschäumten Träger kann eine derartige Struktur durch Wahl der Schäumbedingungen erzielt werden, wobei der Zusammenhang zwischen der Porenstruktur und diesen Bedingungen dem Fachmann bekannt ist. Werden mikroporöse Membranen als Träger benutzt, so sind asymmetrische Membranen einsetzbar, bei denen durch die Wahl der Ausfällbedingungen ein Gradient der Porengröße über die Membrandicke bewirkt wird. Anstelle eines asymmetrischen Trägers ist es insbesondere bei Verwendung mikroporöser Membranen als Träger auch möglich, eine Matrix ohne oder mit geringer Durchflußminderung bei der Beladung mit einer solchen hohen Durchflußminderung zu kombinieren, wobei die mit hoher Durchflußminderung zuletzt durchströmt wird.

Durch die Verwendung einer derartigen asymmetrischen Matrix oder der beschriebenen Kombination ist es möglich, einen Großteil der Beladung ohne bzw. nur mit geringer Durchflußminderung durchzuführen und dennoch den beschriebenen Selbstregulierungseffekt zu nutzen. Die Durchflußminderung bei der Beladung erfindungsgemäßer asymmetrischer Adsorbentien kann 30 bis 95 %, vorzugsweise 50 bis 90 % betragen. Die gleichen Bereiche gelten für symmetrische erfindungsgemäße Adsorbentien auf der Basis mikroporöser Membranen, die für die Kombination mit Adsorbentien niedriger Durchflußminderung vorgesehen sind. Der Vorteil besteht darin, daß die Durchflußminderung nicht kontinuierlich erfolgt, sondern sprunghaft gegen Ende der Beladung, sobald die Front des Adsorbenden im Bereich der hohen Durchflußminderung ankommt, so daß der größte Teil der Beladung mit hoher hydraulischer Permeabilität erfolgen kann. Diese sprunghafte Abnahme kann auch als Indiz für den bevorstehenden Durchbruch des Adsorbenden gewertet und beispielsweise in automatisierten System als Signal zum Abbruch der Beladung eingesetzt werden.

**Herstellung der Matrix**

Zur Pfropfung können einfach ethylenisch ungesättigte Monomere verwendet werden, gegebenenfalls unter Zusatz eines mehrfach ungesättigten Monomeren zur Bewirkung einer geringen Vernetzung der aufgepfropften Polymerschicht. Die einfach ungesättigten Monomeren enthalten entweder die funktionellen Gruppen zur Solvatisierung der aufgepfropften Polymerschicht und die funktionellen Gruppen und/oder Liganden zum Hervorrufen der Wechselwirkung bereits von vornherein, d.h. vor der Pfropfung oder sie enthalten eine chemisch reaktive Gruppe, die es ermöglicht, diese Gruppen und/oder Liganden in einer oder mehreren chemischen Umsatzungen nachträglich einzuführen.

Der letztgenannte Weg stellt die bevorzugte Ausführungsform der Erfindung dar, wobei als eine reaktive Gruppe enthaltendes Monomer beispielsweise Glycidylmethacrylat, Glycidylacrylat und Methylacrylamidoglycolatmethylether (MAGME) einsetzbar sind, und Glycidylmethacrylat besonders bevorzugt wird, wenn die Anwendung der Matrix den Einfluß extremer pH-Werte einschließt. Im Falle der Adsorbentien trifft dies vielfach zu, zwar nicht bei der Adsorption selbst, jedoch häufig bei der Reinigung oder Regenerierung. Bei Säure-Base-Katalysatoren trift es auch bei der Anwendung zu. Ist hingegen die Hydrolysebeständigkeit von geringer Bedeutung und eher eine geringe Hydrophobie für die Anwendung ausschlaggebend, werden die beiden anderen Monomere bevorzugt. Die reaktive Gruppe der beiden Glycidylester ist die Epoxidgruppe, während MAGME eine aktivierte Esterbindung aufweist, die bei Umsetzung mit Aminen schon bei Raumtemperatur glatt zu den entsprechenden Amiden führt und außerdem eine ebenfalls labile Methoxygruppe, die eine säurekatalysierte Vernetzung ermöglicht.

Polyglycidylmethacrylat ist als Homopolymer wasserunlöslich, so daß Umsetzungen nach Aufpfropfung von Glycidylmethacrylat auf den Träger zur Einführung der funktionellen Gruppen und/oder Liganden oder Reaktanden in einem wäßrigen Reaktionsmedium als Heterogenreaktion einerseits relativ langsam und andererseits von außen nach innen fortschreitend erfolgen. Erstens ist immer letzteres dann unerwünscht, wenn eine statistische Verteilung verschiedener Gruppen, Liganden oder Reaktanden angestrebt wird. Bei bestimmten Ausführungsformen der Erfindung wird daher zum Erreichen einer quasi-Homogenreaktion ohne diese Nachteile, die Phasentransferkatalyse angewandt, und zwar im Falle von anionischen Reagenzien zur Einführung der funktionellen Gruppen, oder es wird ein Lösungsmittel für Polyglycidylmethacrylat als Reaktionsmedium eingesetzt.

Ohne diese Maßnahmen wird gearbeitet, wenn sämtliche Monomereinheiten mit derselben funktionellen Gruppe versehen werden sollen, und das dafür erforderliche Reagens auch bei einer Heterogenreaktion ausreichend rasch reagiert. Dies ist der Fall bei der Quarternisierung mit Trimethylamin zu einem stark basischen Ionenaustauscher oder der Umsetzung mit Diethylamin zu einem schwach basischen Ionenaustauscher. Nach dieser Ausgestaltung der Erfindung , nämlich bei Anwendung eines wäßrigen Reaktionsmediums, das kein Lösungsmittel für Polyglycidylmetharcrylat darstellt, ist die quantitative Umsetzung des aufgepfropften Polymeren mit folgenden Aminen möglich, wobei typische Reaktionsbedingungen für annähernd 100 prozentigen Umsatz in Klammern angegeben sind: Trimethylamin (20 % Trimethylaminhydrochlorid, pH = 11, 20 Minuten, Raumtemperatur), Ethyldimethylamin (20 %, mit Schwefelsäure auf pH = 11 gebracht, 15 Minuten, 50 °C), Diethylmethylamin (20 %, mit Schwefelsäure auf pH = 11 gebracht, 30 Minuten, 50 °C), 1,4-Diazabicyclo(2,2,2)octan (20 % DABCO in 1 N Schwefelsäure, 15 Minuten, 95 °C), Diethylamin (Zusatz von 10 % Wasser, 30 Minuten, 50 °C, Ethylendiamin (Zusatz von 10 % Wasser, 15 Minuten, 80 °C), Diethylentriamin und Triethylentetramin (beide wie Ethylendiamin), Imidazol (20 % in 1 N Schwefelsäure, 60 Minuten, 95 °C).

In einer Ausführungsform der Erfindung wird die Phasentransferkatalyse, wobei Tetrabutylammoniumbisulfat (TBABS) Als Phasentransferkatalysator bevorzugt wird, zur Einführung folgender Gruppen aus einem wäßrigen Reaktionsmedium angewandt (in Klammern werden typische Bedingungen für quantitativen Umsatz angegeben): Sulfonsäuregruppen (20 % Natriumsulfit, 5 % TBABS, pH = 8, 60 Minuten, 95 °C), Mercaptogruppen (10 % Natriumsulfid, 5 % TBABS, pH = 9, 60 Minuten 60 °C), Iminodiessigsäuregruppen (40 % Na-Iminodiacetat, 5 % TBABS, pH = 11, 15 Minuten, 95 °C), N-Methylaminoessigsäuregruppen (40 % Na-Salz des Sarkosins, 5 % TBABS, pH = 11, 10 Minuten, 95 °C).

In einer weiteren Ausführungsform der Erfindung wird die Derivatisierung des aufgepfropften Glycidylmethacrylats in einem Reaktionsmedium durchgeführt, das entweder ein Lösungsmittel oder zumindest ein starkes Quellmittel für das Polymer darstellt. Dieser Weg wird bevorzugt, wenn nur eine unvollständige Umsetzung beabsichtigt ist, die jedoch in statistischer Verteilung erfolgen soll. So verläuft die Quarternisierung mit Pyridin (50 % in 1 N Schwefelsäure, 50 %) innerhalb von 60 Minuten quantitativ, während bei einer Herabsetzung der Reaktionszeit im Bereich zwischen 20 und 40 Minuten definierte Teilumsetzungen erreicht werden können. Diese Reaktion wird bevorzugt für die Ausführungsform der Erfindung, die auf der Kombination von quarternären Aminogruppen mit Epoxidgruppen zur zuerst ionischen und anschließend chemischen Bindung von Liganden oder Enzymen beruhen. Dabei werden 15 bis 95 % der Epoxidgruppen in Pyridiniumgruppen umgewandet, vorzugsweise 30 bis 90 %.

Diese Reaktion, die im Prinzip auch mit anderen tertiären Aminen ausgeführt werden kann, stellt in einer Ausgestaltung der Erfindung ein Zwischenprodukt dar für die Herstellung erfindungsgemäßer Matrices, deren Wirksamkeit auf Wechselwirkungen gebundener Proteine beruhen wie z.B. von Enzymen oder immunologisch aktiven Proteinen wie z.B. Protein A. Die Bindung der Proteine an dieses Zwischenprodukt erfolgt in der Weise, daß zunächst bei einem pH-Wert oberhalb des isoelektrischen Punktes des Proteins seine ionische Bindung herbeigeführt wird. Dabei ist festzustellen, daß eine sofortige Elution des Proteins beispielsweise mit einer 1 M KCl-Lösung praktisch vollständig ist. Der eluierbare Anteil des Proeins sinkt jedoch schon nach wenigen Minuten merklich ab, was auf die allmähliche chemische Bindung über die restlichen Epoxidgruppen zurückzuführen ist, und nach einem Zeitraum von beispielsweise einer Stunde ist praktisch das gesamte Protein chemisch gebunden, wenn die Beladung bei pH = 9 durchgeführt wurde. Bei pH-Werten zwischen 7 und 9 kann dieser Zeitraum sich auch auf 3 bis 4 Stunden ausdehnen.

Eine weitere Ausgestaltung der Erfindung betrifft die teilweise Hydrolyse der Epoxidgruppen in einem Lösungsmittel für Polyglycidylmethacrylat mit Perchlorsäure als Katalysator. Perchlorsäure wird deshalb bevorzugt, weil andere Mineralsäuren wie Schwefelsäure, Salpetersäure und Chlorwasserstoff von den Epoxidgruppen zu einem erheblichen Anteil unter Veresterung gebunden werden. Eine quantitative Hydrolyse erfolgt bei 40 °C innerhalb von 30 Minuten, wenn 5 % Wasser enthaltendes Dioxan, das 0,05 N in bezug auf Perchlorsäure ist, verwendet wird. Eine teilweise Hydrolyse wird mit dem Ziel durchgeführt, bei der nachfolgenden Umsetzung der restlichen Epoxidgruppen nach einer der obengenannten Reaktionen in statistischer Verteilung eine verminderte Dichte an funktionellen Gruppen zu erhalten. Der Bereich der Hydrolyse, die vorzugsweise über die Reaktionszweit gesteuert wird, beträgt 10 bis 80 % der Epoxidgruppen, wobei der Bereich 20 bis 50 % im allgemeinen bevorzugt wird.

13

Ein auf diese Weise teilhydrolysiertes Produkt kann beispielsweise nach der bereits beschriebenen Methode an den restlichen Epoxidgruppen sulfoniert werden, und es können anschließend an den Hydroxylgruppen nach bekannten Methoden Farbstoffliganden fixiert werden. Die entstehende Matrix hat, wie bereits ausgeführt, eine stärkere negative Ladung, als wenn die Farbstoffliganden alleine vorhanden sind.

In einer andern Ausführungsform der Erfindung wird die Dichte an funktionellen Gruppen bzw. Liganden dadurch herabgesetzt, daß bei der Pfropfung von vorneherein ein Gemisch von Glycidylmethacrylat und einem anderen Monomeren eingesetzt werden, das bei der Derivatisierung zu den funktionellen Gruppen bzw. Liganden nicht reagiert. Dabei besteht allerdings je nach den Copolymerisationsparametern der betreffenden Monomere die Gefahr, daß die Verteilung der Monomere nicht statistisch erfolgt, sondern bevorzugte Kettenbereiche mit überwiegend Glycidylmethacrylat oder dem anderen Monomeren auftreten. In der genannten Ausführungsform werden Hydroxyethylmethylacrylat und Dihydroxypropylmethacrylat als Copolymere bevorzugt, bei denen dieser Effekt nicht störend in Erscheinung tritt. Der Anteil dieser Comonomere in der aufgepfropften Polymerschicht (nicht im Monomerengemisch) beträgt 5 bis 50 Mol %, vorzugsweise 10 bis 30 Mol %.

Als Zwischenprodukt bei der Herstellung erfindungsgemäßer Matrices sind vielfach primäre Aminogruppen in der aufgepfropften Polymerschicht zweckmäßig, die die Einführung wewiterer funktioneller Gruppen oder Liganden durch Verknüpfung über eine Amidbindung ermöglichen. Die Umsetzung mit Ammoniak ist hierfür nicht geeignet, weil dabei eine unkontrollierbare Mehrfachreaktion zu sekundären und tertiären Aminogruppen unter Vernetzung eintritt. In einer Ausführungsform der Erfindung wird zur Einführung von primären Aminogruppen die bereits beschriebene Umsetzung mit Ethylendiamin herangezogen, wobei in diesem Fall durch Anwendung eines Überschusses von Ethylendiamin eine Mehrfachreaktion weitgehend vermieden werden kann. In diesem Fall wird jedoch gleichzeitig eine sekundäre Aminogruppe eingeführt, die später, also nach Überführung der primären Aminogruppe in eine Amidbindung ihren kationischen Charakter beibehält.

Soll ein kationischer Charakter der Matrix, der gegebenenfalls auf Grund seiner ionischen Bindungsfähigkeit stören kann, vermieden werden, wird gemäß einer andern Ausführungsform der Erfindung primär eine Quarternisierung der Epoxidgruppen mit Hexmethylentetramin (Urotropin) durchgeführt, und dieses Produkt mit Mineralsäuren hydrolytisch gespalten, wobei einheitlich primäre Aminogruppen erhalten werden. Die Umsetzung ist quantitativ, wenn die gepfropfte Matrix mit einer 40-prozentigen Lösung von Urotropin in Eisessig 90 Minuten bei 50 °C zur Reaktion gebracht wird. Eine Verkürzung der Reaktionszeit führt zu einer Teilumsetzung, wobei eine statistische Verteilung der Gruppen erreicht wird. Nach Teilumsetzung kann die Hydrolyse des Primärproduktes der quarternären Urotropin-Adduktes mit Perchlorsäure durchgeführt werden. Die statistisch verteilten Aminogruppen eignen sich außer für die bereits erwähnte Ankopplung von funktionellen Gruppen oder Liganden über die Amidbindung auch für die gebräuchliche Bindung von Proteinen wie z.B. Enzyme unter Verwendung von Glutardialdehyd und nachfolgender Reduktion mit Natriumborhydrid zur Umwandlung der primär entstehenden Schiffschen Basen in die stabileren Amine.

Eine weitere Ausführungsform der Erfindung, die auf einer mehrstufigen Umsetzung beruht, ist die Überführung des Iminodiessigsäure-Liganden in die entsprechende Hydroxamsäure. Dabei wird zunächst wie breits beschrieben die Reaktion mit Iminodiessigsäure durchgeführt, das Produkt durch Behandlung mit einer Mineralsäure in die H-Form übergeführt und daraus durch 30-minütige Umsetzung mit Carbonyldiimidazol (10-prozentige Lösung in Dimethylformamid) bei Raumtemperatur das Imidazolid hergestellt. Dieses ergibt mit Hydroxylaminhydochlorid (10 % in Dimethylformamid) ebenfalls nach 30 Minuten bei Raumtemperatur die entsprechende Hydroxamsäure, die als Chelatbildner, insbesondere für dreiwertiges Eisen, einsetzbar ist. Das Zwischenprodukt dieser Reaktionsfolge, das Imidazolid, ist auf Grund seiner hohen Reaktivität auch zur Kopplung anderer funktionellere Gruppen, Liganden oder Reaktanden über Aminogruppen geeignet.

**Die Verwendung der erfindungsgemäßen Matrix.**

Erfindungsgemäße Matrices mit Sulfonsäuregruppen können sowohl für die adsorptive Stofftrennung durch Ionenaustausch, insbesondere von Proteinen eingesetzt werden, als auch in der Säureform für die heterogene Säurekatalyse. Typische katalytische Umsetzungen, für die derartige Katalysatoren geeignet sind, sind hydrolytische Reaktionen wie z.B. die Verseifung von Estern oder die Veresterung von Alkoholen mit Carbonsäuren.

Bei Matrices mit quarternären Ammoniumgruppen werden diejenigen bevorzugt, die durch Umsetzung der mit Glycidylmethacrylat gepfropften Matrix mit Trimethylamin erhalten wurden, weil diese die höchste thermische Beständigkeit aufweisen. Diese Matrices sind ebenfalls sowohl als Ionenaustauscher als auch als basische Katalysatoren verwendbar.

Matrices mit Chelatliganden wie z.B. Iminodiacetat- und Sarkosinliganden können nach Beladung mit Schwermetallen wie z.B. Kupfer für die adsorptive Trennung von Proteinen durch IMAC eingesetzt werden, Matrices mit zur Hydroxamsäure umgesetztem Iminodiacetatliganden ebenfalls, jedoch in diesem Fall vorzugsweise nach Beladung mit dreiwertigem Eisen. Die genannten Chelatbildner werden auch zur Abtrennung und Anreicherung von Schwermetallen aus verdünnten Lösungen eingesetzt. Matrices mit Aminliganden wie die Umsetzungsprodukte von mit Glycidylmethacrylat gepfropften Matrices mit Ethylendiamin, Diethylentriamin, Triethylentetramin und Imidazol, werden verwendet für die Abtrennung und Anreicherung von Schwermetallen, die Aminkomplexe bilden wie z.B. Kupfer.

Die Erfindung wird nachfolgend unter Bezugnahme auf die Zeichnung und mit Hilfe von Beispielen weiter beschrieben; es zeigen:

Figur 1:     den Zusammenhang zwischen statischer Bindungskapazität und hydraulischeer Permeabilität mikroporöser Cellulosenitratmembranen verschiedener nomineller Porengrößen

Figur 2:     die Invertierung von Rohrzucker durch membrangebundene Invertase aus Bäckerhefe

**Beispiele**

Beispiel 1

Vergleich von Adsorption gemäß dem Stand der Technik mit dem erfindungsgemäßen Adsorbens nach Beispiel 4

Zum Vergleich wurden folgende handelsübliche Einheiten herangezogen, bei denen es sich durchwegs um Kationenaustauscher handelt, die für die Proteintrennung angeboten werden:

a) Millipore Memsep 1000

Cat. No. CICM 10 H 01 Charge No. P15850

1,2 $\mu$m regenerated Cellulose

Ion Exchange Ligand Carboxymethyl

b) FMC ACTIDISC Carboxymethyl (CM)

Cat. No. 80131 Lot No. 122289 CM

c) CUNO Zetaprep SP

Cat. No. 7503301 SP Charge No. VPSP 9102B4

Cellulose with grafted acrylic polymers

Ion exchange ligand $-O-CH_2-CH_2-CH_2-SO_3$

Die verglichenen Matrices wiesen ohne das jeweilige Gehäuse folgende Maße und Gewichte bzw. Durchflußwerte bei 1 bar für Puffer im eingebauten Zustand (mit Gehäuse) auf:

|  | Trockengewicht (g) | Naßvolumen (ml) | Fläche ($cm^2$) | Dicke (cm) | Durchflußwert (ml/min bar) |
|---|---|---|---|---|---|
| Millipore | 0,68 | 1,4 | 5 | 0,28 | 6 |
| FMC | 0,44 | 0,95 | 19 | 0,05 | 22 |
| Cuno | 3,2 | 6,8 | 22 | 0,31 | 260 |
| Beispiel 4 | 0,12 | 0,5 | 20 | 0,025 | 4700 |

Der Vergleich erfolgte durch Beladung mit einer Lösung von 1 mg/ml Cytochrom C in 0,01 M k-Phosphatpffer pH = 7,0, wobei die Durchbruchskurve mittels einer nachgeschalteten UV-Durchflußküvette und eines Schreibers aufgenommen wurde. Die statische Bindungskapazität wurde aus der insgesamt gebundenen Menge Cytochrom C bestimmt, sobald die durchgepumpte Lösung wieder die Ausgangskonzentration erreicht hatte und auf die Trockensubstanz der Matrix bezogen. Als dynamische Bindungskapazität wird diejenige Cytochrom C-Menge angegeben, die zu dem Zeitpunkt gebunden ist, wenn die Konzentration der durchgepumpten Lösung auf 10 % der Ausgangskonzentration angestiegen ist. Angegeben wird auch die lineare Beladungsgeschwindigkeit v, bei der gemessen wurde, d.h. das pro Zeiteinheit geförderte Volumen geteilt durch die Fläche der Matrix.

|  | v (cm/min) | statische Bindungsk. (mg/g Trockensubstanz) | dynamische Bindungsk. (in % der statischen) |
|---|---|---|---|
| Millipore | 0,2 | 25,1 | 73,1 |
| FMC | 0,45 | 27,9 | 8,0 |
| Cuno | 3,2 | 153 | 14,0 |
| Beispiel 4 | 3,2 | 228 | 76,0 |

Um einen Vergleich der Eigenschaften auf Volumenbasis zu ermöglichen und auch die unterschiedlichen hydraulischen Permeabilitäten der Matrices bei gleicher Dicke zu veranschaulichen, wurden die Meßwerte auf einen 1 cm$^3$ - Würfel der Matrices umgerechnet.

|  | hydraulische Permeabilität (cm/min bar) | statische Bindungskapazität | dynamische (mg/ml) |
|---|---|---|---|
| Millipore | 0,336 | 12,2 | 8,85 |
| FMC | 0,058 | 12,9 | 1,03 |
| Cuno | 3,66 | 72,1 | 10,1 |
| Beispiel 4. | 5,88 | 54,8 | 41,7 |

Dieses Beispiel zeigt, daß die erfindungsgemäße Matrix in bezug auf die hydraulische Permeabilität weit über den Materialien nach dem Stand der Technik liegt und, was noch viel wichtiger ist, dies mit einer extrem hohen dynamischen Kapazität verbindet. Dabei ist auch zu berücksichtigen, daß die erfindungsgemäße Matrix unter den verglichenen Materialien mit Abstand die geringste Dicke aufwies und der Relativwert der dynamischen Kapazität bezogen auf die statische mit steigender Schichtdicke nur zunehmen kann.

Beispiel 2

Pfropfung von Glycidylmethacrylat auf einer Nylon 6-Membrane

Die Pfropfung wurde analog Beispiel 8 der PCT/EP90/01498 (Arbeitsbezeichnung "Pfropfung nach Chlorierung") durchgeführt, wobei jedoch abweichend von diesem Beispiel eine Membranbahn vom nominellen Porendurchmesser 0,65 $\mu$m verwendet wurde (Bahnbreite 40 cm).

CAT-Lösung: 2-prozentige Lösung von Chloramin T mit Schwefelsäure auf pH = 6,3 eingestellt.

Monomeremulsion: 6 kg Glycidylmethacrylat wurden mit 120 g Emulgator (Arlatone G, ICI) vermischt und mit 113,8 kg 0,1 M N-Phosphatpuffer pH = 8 fünf Minuten lang mit einem Flügelrüher emulgiert.

CAT-Lösung und Monomeremulsion wurden in Behandlungswannen mit Umlenkrollen für die Membranbahn gefüllt, wobei die Monomerwanne zur Atmosphäre abgedichtet und mit Stickstoff beaufschlagt wurde. Zwischen CAT-Wanne und Monomerwanne befanden sich zwei weitere Wannen, wobei die erste mit RO-Wasser gefüllt war, das während der Behandlung mit 100 l/h ausgetauscht wurde, die zweite mit Phosphatpuffer pH = 8. Nach der Monomerwanne folgte eine weitere Spülwanne mit RO-Wasser, anschließend die Aufwicklung. Die Trocknung erfolgte in einem getrennten Schritt auf einer Trockentrommel von 70 °C.

Die Monomeremulsion wurde durch Zudosieren einer Lösung von 3 % Na-Dithionit und 3 % Natriumhydroxid auf ein Redoxpotential von -310 mV gebracht, welches während der Pfropfung potentiometrisch gemessen und durch Nachdosierung von 3-prozentiger Dithionitlösung konstant gehalten wurde. Die Verweilzeit im CAT-Bad betrug zwei Minuten, die Verweilzeit im Monomerbad (Pfropfdauer) wurde über die Bahngeschwindigkeit auf 13 Minuten eingestellt.

Der Pfropfgrad der erhaltenen Membrane (die Massenzunahme bei der Pfropfung) betrug 23 %. Die hydrauliche Permeabilität der Membrane sank bei der Pfropfung von 46cm/min bar auf 42 cm/min bar ab.

Beispiel 3

Copfropfung von Glycidylmethacrylat und Hydroxymethylmethacrylat auf einer Cellulosehydratmembran (nach dem in der Deutschen Patentanmeldung P 41 07 171.9, Arbeitsbezeichnung "Pfropfung nach Filmbildung", beschriebenen Verfahren)

Herstellung von N-Chlor-Nylon 6: 100 mg Nylon 6 (in Form einer mikroporösen Membrane) wurden in einem Gemisch aus 5 g mit Molekularsieb getrocknetem Methylenchlorid und 0,05 g Ameisensäure bei Raumtemperatur vorgelegt und 1 g t-Butylhypochlorit hinzugefügt. Nach 2,5 Stunden bei Raumtemperatur war die Nylonmembrane gelöst und die Lösung wurde mit Methylenchlorid auf 0,1 % N-Chlornylon verdünnt.

Eine handelsübliche Cellulosehydratmembrane der Typbezeichnung SM 11642 (Sartorius AG Göttingen) und der nominellen Porengröße 5 $\mu$m wurde mit der 0,1-prozentigen Lösung von N-Chlor-Nylon 6 durch Eintauchen imprägniert, zunächst bei Raumtemperatur und anschließend 10 Minuten bei 80 °C getrocknet.

Die mit N-Chlor-Nylon beschichtete Membrane wurde 5 Minuten in einem Pfropfbad folgender Zusammensetzung gepfropft: 2 % Hydroxyethylmethylacrylat, 5 % Glycidylmethacrylat emulgiert in 0,3 % Arlatone-G, 0,02 % Na-Dithionit in Phosphatpuffer pH = 7,5, nach Zugabe der Reagenzien erneut auf pH = 7,5 gestellt. Die gepfropfte Membrane wurde mit RO-Wasser gespült und bei 80 °C getrocknet. Der Pfropfgrad betrug 7,4 %.

Beispiel 4

Stark saurer Ionenaustauscher

Ein nach Beispiel 3 hergestellter gepfropfter Träger wurde 60 Minuten bei 95 °C mit einer 20-prozentigen Lösung von Natriumsulfit mit einem Gehalt von 2 % sek-Natriumphosphat-Dihydrat und 5 % Tetrabutyammoniumbisulfat, die mit NaOH auf pH = 8 gebracht wurde, umgesetzt, 10 Minuten mit RO-Wasser gespült, mit 0,3 N HCl gespült, zweimal mit 0,1 % NaCl gespült und bei 80 °C getrocknet.

Die statische und dynamische Bindungskapazität des Austauschers ist bereits in Beispiel 1 angegeben.

Die Beladung mit Cytochrom C sank die hydraulische Permeabilität der Matrix von 235 cm/min bar auf 140 cm/min bar. Nach Regenerierung wurde wieder die Ausgangspermeabilität erreicht, woraus hervorgeht, daß die Permeabilitätsabnahme nicht auf Verblockung der Poren durch Partikel, sondern auf die Proteinbeladung zurückzuführen war.

Beispiel 5

Chelatmatrix als schwach saurer Ionenaustauscheer und für IMAC

Ein nach Beispiel 2 gepfropfter Trägeer wurde analog Beispiel 4, jedoch mit 35 % Na-Salz der Iminodiessigsäure anstelle von Na-Sulfit und bei pH = 11 umgesetzt.

Die hydraulische Permeabilität der ungepfropften Membrane betrug 137, die der gepfropften 127 und die der mit Iminodiacetat umgesetzten 3 cm/min bar. Daraus ergibt sich nach der in der Beschreibung skizzierten Abschätzung eine Porenausfüllung der Matrix mit aufgepfropften Glycidylacrylat von 3,7 %, und eine Ausfüllung mit dem gequollenen Polymeren nach der Umsetzung mit Iminodiessigsäure von 85 %, und somit ein Quellgrad von 23.

Die Bindungskapazität der Matrix für zweiwertiges Kupfer betrug 150 $\mu$g/cm$^2$. In der Natriumform, also vor der Beladung mit Kupfer, betrug die statische Bindungskapazität bei pH = 7 for Cytochrom 440 $\mu$g/cm$^2$, und für Serumalbumin war keine Bindung festzustellen. Nach Beladung mit Kupfer hingegen betrug unter sonst gleichen Bedingungen die Kapazität für Cytochrom C 260 und für Serumalbumin 146 $\mu$g/cm$^2$.

Aus diesen Messungen ergibt sich, daß die Matrix in der NaForm als schwach saurer Ionenaustauscher eingesetzt werden kann, der entsprechend den isoelektrischen Punkten zwar Cytochrom C, aber kein Albumin binden kann. In der Kupferform hingegen wird Albumin nach dem IMAC-Prizip gebunden, wobei nach diesem Mechanismus die Bindungskapazitäten generell niedriger sind, als beim Ionenaustausch.

Beispiel 6

Kationische Gruppen und Epoxidgruppen enthaltende Matrix

Nach Beispiel 2 hergestellte Membranproben wurde mit verschiedenen Reaktionszeiten zwischen 5 und 60 Minuten bei 50 °C in einer äquimolaren Mischung von Pyridin und Eisessig umgesetzt. Nach Spülen mit verdünnter Essigsäure wurde die Matrix zunächst mit RO-Wasser und anschließend mit 0,3 N HCl, RO-Wasser und Aceton gespült und getrocknet. Der Umsetzungsgrad mit Pyridin unter Quarternisierung wurde für jede Probe aus der Massenzugabe bestimmt.

Für die einzelnen Proben wurde die dynamische Bindungskapazität für Serumalbumin bei pH = 7 bestimmt sowie die Eluierbarkeit des gebundenen Proteins bei sofortiger Elution mit 1 M KCl. In einem Parallversuch wurde auf gleiche Weise beladen, jedoch die Elution erst nach einer Stunde Verweilzeit im feuchten Zustand bei Raumtemperatur durchgeführt.

| Quarternisierungsgrad (%) | dynam. Bindungskapazität ($\mu$m/cm$^2$) | Eluierbarkeit | | nicht eluierbar ($\mu$g/cm$^2$) |
|---|---|---|---|---|
| | | sofort | nach 1 Std. | |
| 12 | 796 | 63 | 20 | 637 |
| 46 | 1079 | 65 | 24 | 820 |
| 74 | 1037 | 78 | 39 | 632 |
| 100 | 1031 | 91 | 88 | 123 |

Der bei der vollständigen Quaternisierung mit KCl nicht eluierbare Anteil war zum Großteil mit 1-prozentiger Triton X 100-Lösung entfernbar und etwa diese Menge ließ sich auch bei den teilquaternisierten Proben noch mit Triton entfernen. Der Rest jedoch, und zwar 500 bis 700 $\mu$g/cm$^2$, war chemisch an die Epoxidgruppen gebunden. Ohne Teilquarternisierung des aufgepropften Glycidylmethacrylats, wobei nur die Oberfläche des wasserunlöslichen Polymers für die Bindung zur Verfügung steht, betrug die chemische Bindung der Proben bei mehrstündiger Inkubation mit Albuminlösung nur etwa 80 $\mu$g/cm$^2$.

Beispiel 7

Katalysator mit chemisch gebundenem Enzym

Durch die Matrix nach Beispiel 6 mit einem Quaternisierungsgrad von 35 % wurde eine Lösung von 10 mg/ml Invertase aus Hefe in 0,05 M Na-Carbonatpuffer pH = 9,5 filtriert. Nach einer Stunde wurde der nicht chemisch gebundene Anteil des Enzyms durch Elution mit 1 M KCl entferent.

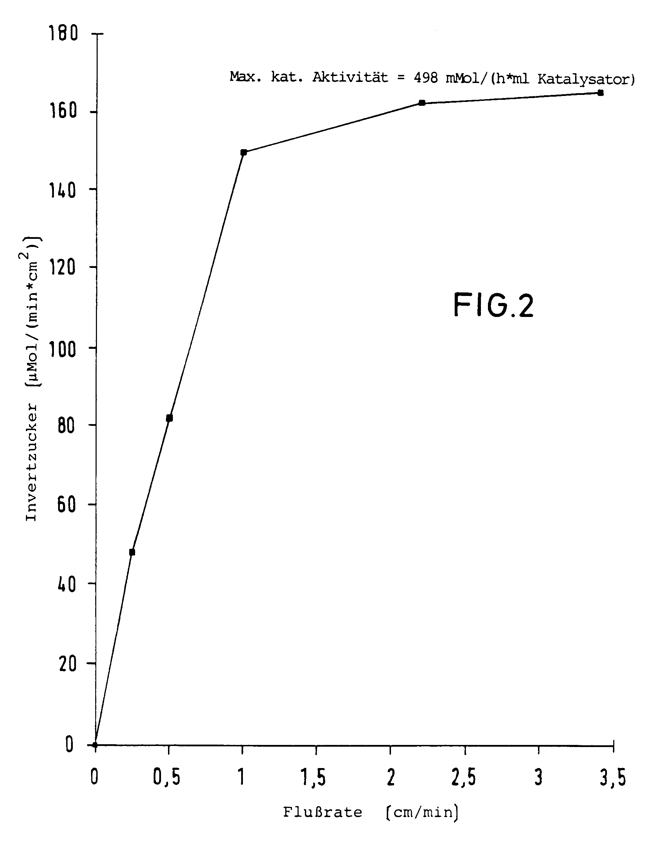

Die Matrix wurde in ansteigenden Flußraten mit einer 0,25 M Lösung von Saccharose von pH = 4,5 durchströmt und die gebildete Glucosemenge nach der Dinitrosalicylat-Methode bestimmt. Bis zu einer linearen Strömungsgeschwindigkeit von 0,03 cm/min, entsprechend einer Verweilzeit in der Matrix von 160 Sekunden, wurde 100 % Inversion, also Spaltung in Glucose und Fructose festgestellt. Bei zunehmender Strömungsgeschwindigkeit sank zwar der Inversionsgrad, die pro Zeiteinheit gebildete Glucosemenge nahm jedoch zu (siehe Figur 2). Daraus ergab sich eine maximale katalytische Aktivität der Matrix, bezogen auf die Fläche von 166 $\mu$Mol/min cm$^2$ bzw. von 498 mMol/h cm$^3$, bezogen auf das Volumen der Matrix.

In einem Vergleichsversuch wurde die Invertase-Bindung auf dem nicht teilquaternisierten gepfropften Träger durchgeführt. In diesem Fall war die Invertase-Aktivität gerade noch nachweisbar, die maximale katalytische Aktivität betrug aber weniger als 2 % des oben genannten Wertes.

Beispiel 8

Katalysator mit ionisch gebundenem Enzym

Der Versuch wurde identisch wie Beispiel 7 durchgeführt, die Matrix wurde jedoch durch Umsetzung mit Trimethylamin vollständig quarternisiert. Die maximale katalytische Aktivität betrug in diesem Fall 550 mMol/h cm$^3$. Durch Elution mit 1 M KCl sank die Aktivität auf einen Rest von etwa 10 % ab und wurde nach neuerlicher Belasung mit Invertase vollständig wiederhergestellt.

Dieses Beispiel zeigt, daß durch Verwendug eines Adsorbens als Träger für das Enzym eine regenerierbare Matrix für die enzymatische Katalyse hergestellt werden kann, was wegen der allmählichen Inaktivierung der Enzyme während des Gebrauchs von Bedeutung ist.

Beispiel 9

Saurer Katalysator

Ein nach Beispiel 2 gepfropfter Träger wurde analog Beispiel 4 sulfoniert und durch mehrfaches Spülen mit N/10 Schwefelsäure in die H-Form überführt. Durch diese Matrix wurde mit steigenden linearen Strömungsgeschwindigkeiten eine 50-prozentige Rohrzuckerlösung von 80 °C gepumpt und die gebildete Glucosemenge bestimmt. Die maximale katalytische Aktivität wurde bei Strömungsgeschwindigkeiten über 2,5 cm/min erreicht, was einer Verweilzeit in der Matrix von 1,4 Sekunden entsprach. Bezogen auf das Matrixvolumen betrug die maximale katalytische Aktivität 85 mMol/h cm$^3$.

Beispiel 10

Schwermetalladorbens auf Aminbasis

Der gepfropfte Träger nach Beispiel 2 wurde 30 Minuten lang mit einer 90-prozentigen wäßrigen Lösung von Diethylentriamin bei 80 °C umgesetzt, wobei der Umsatzungsgrad 100 % betrug.

Die Matrix wurde bei einer linearen Flußrate von 3 cm/min mit einer 0,001 M Kupfer-II-Sulfatlösung (pH = 4,5) bis zum Anstieg der Cu-Konzentration im Durchlauf auf 10 % des Ausgangswertes beladen, mit RO-Wasser kurz nachgespült, und das gebundene Kupfer mit 1 N HCl eluiert. Im Eluat wurde das Kupfer mit "Spectroquant Cu" (Merck) bestimmt, woraus sich eine dynamische Bindungskapazität von 0,549 mg/cm$^2$ bzw. 27,5 mg/cm$^3$ ergibt. Die hydraulische Permeablität der Matrix sank bei der Beladung mit Kupfer um etwa 20 % und stieg nach der Elution wieder auf den Ausgangswert.

In der mit Cu-beladenen Form erwies sich die Matrix als ungeeignet für IMAC.

Beispiel 11

Erhöhung der Spezifität eines Adsorbens durch kurze Verweilzeit

Eine Lösung von 1,6 mg/ml Rinderserumalbumin und 0,8 mg/ml Rinder-Gammaglobulin in 0,05 M Natriumacetat-Puffer pH = 5,9, mit einem Zusatz von 0,03 M Natriumchlorid wurde mit verschiedenen linearen Strömungsgeschwindigkeiten durch eine doppelte Lage des stark sauren Ionenaustauschers nach Beispiel 4 geführt. Die Verweilzeit t des Mediums innerhalb der Matrix wurde unter Zugrundelegung des ursprügliche Porenvolumens des Trägers ohne Berücksichtigung des Volumens der gequollenen aufgepfropften Polymerschicht abgeschätzt. Das gebundene Protein wurde mit 1 M KCl eluiert, durch Ultrafiltration aufkonzentriert, und durch Folienelektrophorese auf Celluloseacetatmembranen elektrophoretisch aufgetrennt. Nach Färbung mit Amidoschwarz erfolgte die densitometrische Auswertung, wobei das Albumin/Globulin-Verhältnis ermittelt wurde. In einem Paraellversuch wurde das Albumin/Globulin-Verhältnis unter Gleichgewichtsbedingungen bestimmt, indem die Matrix durch 3 Stunden mit der gleichen Proteionlösung inkubiert wurde

| | | Albumin/Globulin-Verhältnis |
|---|---|---|
| Aufgabenlösung | | 2,0 |
| Gleichgewichtsbeladung | | 1,18 |
| v/cm/min) | t (sec) | |
| 0,8 | 2,3 | 0,90 |
| 32 | 0,058 | 0,56 |
| 64 | 0,029 | 0,396 |

Es ist also möglich, die Spezifität des Adsorbens durch die Verweilzeit der flüssigen Phase zu beinflussen.

**Patentansprüche**

1. Poröse, nichtpartikuläre und konvektiv permeable Matrix, die eine Adsorption, chemische Veränderung durch Katalyse, chemische Reaktion oder eine Adsorption bei gleichzeitiger oder zeitverzögerter kovalenter Bindung gegenüber mindestens einer Komponente einer mit ihr in Kontakt stehenden flüssigen Phase hervorruft,
dadurch gekennzeichnet, daß
die Matrix aus einem Träger mit Schwammstruktur besteht, der eine auf die innere und äußere Oberfläche
begrenzte, aufgepfropfte Polymerschicht aufweist,
die bei Kontakt der Matrix mit der flüssigen Phase solvatisierbar ist derart, daß sie zwischen 2,5 und 97 % des Porenvolumens des Trägers mit Schwammstruktur einnimmt, vorzugsweise zwischen 20 und 90 % und

funktionelle Gruppen zu ihrer Solvatisierung durch die flüssige Phase und

funktionelle Gruppen und/oder Liganden oder Reaktanden trägt, wobei Farbstoffliganden als funktionelle Gruppen, Liganden oder Reaktanden ausgenommen sind und wobei

der zu pfropfende Träger mit Schwammstruktur aus einem Material besteht oder an seiner inneren und äußeren Oberfläche ein Material trägt, das zur Pfropfung befähigte N-H-Bindungen hat oder an seiner inneren und äußeren Oberfläche eine zur Pfropfung befähigte Schicht eines N-chlorierten Polyamids besitzt.

2. Matrix nach Anspruch 1, dadurch gekennzeichnet, daß

der Träger mit Schwammstruktur ein offenzelliger Hartschaum mit einem mittleren Porendurchmesser zwischen 0,05 und 15 $\mu$m bei einem Porenvolumen zwischen 80 und 98 % ist und eine Schichtdicke zwischen 0,5 und 100 mm besitzt.

3. Matrix nach Anspruch 1, dadurch gekennzeichnet, daß

der Träger mit Schwammstruktur eine mikroporöse Polymermembran mit einem mittleren Porendurchmesser zwischen 0,05 und 15 $\mu$m ist, vorzugsweise zwischen 0,45 und 10 $\mu$m.

4. Matrix nach Anspruch 4, dadurch gekennzeichnet, daß

die Polymermembran aus Celluloseacetat, Cellulosenitrat, Cellulosehydrat, Polyvinylchlorid, Polyvinylfluorid, Polyvinylidenfluorid, Copolymeren des Vinylidenfluorids, Polytetrafluorethylen, Polyethersulfon, Polysulfon, Polysulfonamid, Polypropylen, einem Polyamid oder Copolymeren aus Vinylchlorid und Acrylnitril besteht, wobei Cellulosehydrat, Polyvinylidenfluorid, Copolymere des Vinylidenfluorids, Polysulfon, Polyethersulfon und Polyamide bevorzugt sind.

5. Matrix nach Anspruch 1, dadurch gekennzeichnet, daß

die aufgepfropfte Polymerschicht eine Acrylat-, Methacrylat- oder Acrylamidhauptkette aufweist, bevorzugt eine Methacrylathauptkette.

6. Matrix nach Anspruch 1, dadurch gekennzeichnet, daß

die funktionellen Gruppen der aufgepfropften Polymerschicht zu deren Solvatisierung durch die flüssige Phase in Gestalt einer polaren und/oder überwiegend wässrigen Phase

Hydroxylgruppen oder ionische Gruppen sind,

wobei die ionischen Gruppen

Sulfonsäure-, Carboxyl- oder quarternäre Ammoniumgruppen sind.

7. Matrix nach Anspruch 1, dadurch gekennzeichnet, daß

die funktionellen Gruppen der aufgepfropften Polymerschicht zu deren Solvatisierung durch die flüssige Phase in Gestalt einer unpolaren Phase

Alkylreste mit 4 bis 18 Kohlenstoffatomen oder

aromatische Reste sind.

8. Matrix nach Anspruch 1, dadurch gekennzeichnet, daß

die funktionellen Gruppen, Liganden oder Reaktanden der aufgepfropften Polymerschicht ionische stark oder schwach saure oder ionische starb oder schwach basische Gruppen sind, wobei die schwach sauren Gruppen bevorzugt Carboxylgruppen, die stark sauren Gruppen Sulfonsäuregruppen, die schwach basischen Gruppen bevorzugt alkylsubstituierte Aminogruppen und

die stark basischen Gruppen bevorzugt quarternäre Ammoniumgruppen sind.

9. Matrix nach Anspruch 1, dadurch gekennzeichnet, daß

die Liganden der aufgepfropften Polymerschicht zur selektiven und reversiblen Bindung von Proteinen Affinitätsliganden, Alkylreste mit 4 bis 8 Kohlenstoffatomen, Phenylreste, Mercaptogruppen, Phenylboroatiiganden,

thiophile Liganden mit 2 bis 4 Schwefelatomen in Gestalt von Thioether- und/oder Sulfongruppen, oder Chelatbildner mit gebundenen Schwermetallen sind.

10. Matrix nach Anspruch 1, dadurch gekennzeichnet, daß
die Liganden der aufgepfropften Polymerschicht zur selektiven und reversiblen Bindung von Schwermetallen
Chelatbildner sind, bevorzugt Iminodiessigsäuregruppen oder Gruppen, die 2 bis 4 Stickstoffatome in Form von primären und sekundären Aminen besitzen.

11. Matrix nach Anspruch 1, dadurch gekennzeichnet, daß
die Reaktanden der aufgepfropften Polymerschicht reduzierbare oder oxidierbare Gruppen sind.

12. Verfahren zur Herstellung einer porösen, nichtpartikulären und konvektiv permeablen Matrix, die eine Adsorption, chemische Veränderung durch Katalyse, chemische Reaktion oder eine Adsorption bei gleichzeitiger oder zeitverzögerter kovalenter Bindung gegenüber mindestens einer Komponente einer mit ihr in Kontakt stehenden flüssigen Phase hervorruft, nach den bisherigen Ansprüchen, dadurch gekennzeichnet, daß
man auf einen Träger mit Schwammstruktur, der ein
Material enthält oder an seiner inneren und äußeren Oberfläche trägt, das zur Pfropfung befähigte N-H-Bindungen hat oder an seiner inneren und äußeren Oberfläche eine zur Pfropfung befähigte Schicht eines N-chlorierten Polyamids besitzt, mit ethylenisch ungesättigten Monomeren eine auf die innere und äußere Oberfläche begrenzte Polymerschicht aufpfropft, die funktionelle Gruppen zu ihrer Solvatisierung durch die flüssige Phase und
funktionelle Gruppen und/oder Liganden oder Reaktanden aufweist, wobei Farbstoffliganden als funktionelle Gruppen, Liganden oder Reaktanden ausgenommen sind.

13. Verfahren nach Anspruch 13, dadurch gekennzeichnet, daß
die Monomeren reaktive Gruppen aufweisen, durch die funktionelle Gruppen zur Solvatisierung und funktionelle Gruppen und/oder Liganden oder Reaktanden nachträglich einführbar sind.

14. Verfahren nach Anspruch 14, dadurch gekennzeichnet, daß
man als Monomer Metacrylamidoglycolatmethylether, Glycidylacrylat oder Glycidylmethacrylat verwendet, bevorzugt Glycidylmethacrylat.

15. Verwendung der Matrix nach den vorhergehenden Ansprüchen für die adsorptive Stofftrennung, die heterogene Katalyse und die Festphasensynthese.

16. Verwendung der Matrix nach Anspruch 16, dadurch gekennzeichnet, daß
man eine in einer flüssigen Phase enthaltene Komponente an der Matrix zuerst adsorbiert und dann zeitverzögert kovalent bindet.

**Claims**

1. Porous, non-particulate and convectively permeable matrix which causes an adsorption, a chemical change by catalysis, a chemical reaction or an adsorption with simultaneous or delayed covalent bonding relative to at least one component of a liquid phase standing in contact with it, characterised thereby, that the matrix consists of a carrier of sponge structure, which displays a grafted-on polymer layer which is limited to the inner and outer surfaces and which on contact of the matrix with the liquid phase is solvatable in such a manner that it takes up between 2.5 and 97% of the pore volume of the carrier of sponge structure, preferably between 20 and 90%, and carries functional groups for their solvation by the liquid phase and functional groups and/or ligands or reactants, wherein dyestuff ligands are excluded as the functional groups, ligands or reactants and wherein the carrier, which is to be grafted and of sponge structure, consists of a material or at its inner and outer surfaces carries a material which has N-H bonds capable for grafting or at its inner and outer surfaces has a layer of an N-chlorinate polyamide capable for grafting.

2. Matrix according to claim 1, characterised thereby, that the carrier of sponge structure is an open-cell hard foam with a mean pore diameter between 0.05 and 15 micrometres for a pore volume between 80 and 98% and has a layer thickness between 0.5 and 100 millimetres.

21

3. Matrix according to claim 1, characterised thereby, that the carrier of sponge structure is a microporous polymer membrane with a mean pore diameter between 0.05 and 15 micrometres, preferably between 0.45 and 10 micrometres.

4. Matrix according to claim 4 [3], characterised thereby, that the polymer membrane consists of cellulose, acetate, cellulose nitrate, cellulose hydrate, polyvinyl chloride, polyvinyl fluroide, polyvinylidene fluoride, copolymers of the vinylidene fluoride, polytetrafluoroethylene, polyether sulphone, polysulphone, polysulphonamide, polypropylene, a polyamide or copolymers of vinyl chloride and acrylonitrile, wherein cellulose hydrate, polyvinyl fluoride, copolymers of the vinylidene fluoride, polysulphone, polyether sulphone and polyamide are preferred.

5. Matrix according to claim 1, characterised thereby, that the grafted-on polymer layer displays a main chain of acrylate, methacrylate or acrylamide, preferably a methacrylate main chain.

6. Matrix according to claim 1, characterised thereby, that the functional groups of the grafted-on polymer layer are, for their solvation by the liquid phase in the form of a polar and/or predominantly aqueous phase of hydroxyl groups or ionic groups, wherein the ionic groups are sulphonic acid groups, carboxyl groups or quaternary ammonium groups.

7. Matrix according to claim 1, characterised thereby, that the functional groups of the grafted-on polymer layer are, for their solvation by the liquid phase, in the form of a non-polar phase of alkyl residues with 4 to 18 carbon atoms or aromatic residues.

8. Matrix according to claim 1, characterised thereby, that the functional groups, ligands or reactants of the grafted-on polymer layer are ionic strong or weak acid groups or ionic strong or weak basic groups, wherein the weak acid groups or preferably carboxyl groups, the strong acid groups are sulphonic acid groups, the weak basic groups are preferably alkyl-substituted amino groups and the strong basic groups are preferably quaternary ammonium groups.

9. Matrix according to claim 1, characterised thereby, that the ligands of the grafted-on polymer layer are, for the selective and reversible bonding of proteins, affinity ligands, alkyl residues with 4 to 8 carbon atoms, phenyl residues, mercapto groups, phenyl borate ligands, thiophilic ligands with 2 to 4 sulphur atoms in the form of thioether and/or sulphone groups or chelating agents with combined heavy metals.

10. Matrix according to claim 1, characterised thereby, that the ligands of the grafted-on polymer layer are, for the selective and reversible bonding of heavy metals, chelating agents, preferably imino-di-acetic acid groups or groups which have 2 to 4 nitrogen atoms in the form of primary and secondary amines.

11. Matrix according to claim 1, characterised thereby, that the reactants of the grafted-on polymer layer are reducible or oxidisable groups.

12. Method for the production of a porous, non-particulate and convectively permeable matrix which causes an adsorption, a chemical change by catalysis, a chemical reaction or an adsorption with simultaneous or delayed covalent bonding relative to at least one component of a liquid phase standing in contact with it according to the previous claims, characterised thereby, that one grafts a polymer layer, which is limited to the inner and outer surfaces and comprises functional groups for their solvation by the liquid phase and functional groups and/or ligands or reactants, wherein dyestuff ligands are excluded as the functional groups, ligands or reactants, by ethylenically unsaturated monomers onto a carrier of sponge structure which contains or at its inner and outer surfaces carries a material which has N-H bonds capable for grafting or at its inner and outer surfaces has a layer of a N-chlorinate polyamide capable for grafting.

13. Method according to claim 13 [12], characterised thereby, that the monomers comprise reactive groups, by which the functional groups for the solvation and functional groups and/or ligands or reactants are introducible subsequently.

14. Method according to claim 14 [13], characterised thereby, that one uses metacryl amidoglycolate methyl ether, glycidyl acrylate or glycidyl methacrylate, preferably glycidyl methacrylate, as monomers.

22

**15.** Use of the matrix according to the preceding claims for the adsorptive substance separation, the heterogeneous catalysis and the solid phase synthesis.

**16.** Use of the matrix according to claim 16 [15], characterised thereby, that one first adsorbs a component, which is contained in a liquid phase, at the matrix and then bonds it covalently after a time delay.

**Revendications**

**1.** Matrice poreuse, non particulaire et perméable par convection, provoquant une adsorption, une modification chimique par catalyse, une réaction chimique ou une adsorption avec une liaison covalente simultanée ou retardée dans le temps, par rapport à au moins un composant d'une phase liquide qui est au contact de celle-ci, caractérisée en ce qu'elle est formée d'un support ayant une structure spongieuse et qui présente une couche de polymère greffé limitée à la surface intérieure et à la surface extérieure et qui, lors du contact entre la matrice et la phase liquide, peut être solvatée d'une manière telle qu'elle occupe entre 2,5 et 97 % du volume de pores du support ayant une structure spongieuse, de préférence entre 20 et 90 %, et qui porte, de préférence, entre 20 et 90 % de groupes fonctionnels pour sa solvatation au moyen de la phase liquide et des groupes fonctionnels et/ou des ligands ou des partenaires de réaction, des ligands de colorants étant exclus en tant que groupes fonctionnels, ligands ou partenaires de réaction, et le support à greffer ayant une structure spongieuse étant formé d'un matériau qui a des liaisons N-H aptes au greffage, ou comportant un tel matériau sur sa surface intérieure et sur sa surface extérieure, ou possédant une couche de polyamide N-chloré apte au greffage sur sa surface intérieure et sur sa surface extérieure.

**2.** Matrice selon la revendication 1, caractérisée en ce que le support ayant une structure spongieuse est une mousse dure à alvéoles ouverts avec des pores d'un diamètre moyen compris entre 0,05 et 15 $\mu$m, avec un volume de pores compris entre 80 et 98 %, et possède une épaisseur de couche comprise entre 0,5 et 100 mm.

**3.** Matrice selon la revendication 1, caractérisée en ce que le support ayant une structure spongieuse est une membrane polymère microporeuse ayant des pores d'un diamètre moyen compris entre 0,05 et 15 $\mu$m, de préférence entre 0,45 et 10 $\mu$m.

**4.** Matrice selon la revendication 3, caractérisée en ce que la membrane polymère est formée d'acétate de cellulose, de nitrate de cellulose, de cellulose hydratée, de chlorure de polyvinyle, de fluorure de polyvinyle, de fluorure de polyvinylidène, de copolymères du fluorure de vinylidène, de polytétrafluoroéthylène, de polyéthersulfone, de polysulfone, de polysulfonamide, de polypropylène, d'un polyamide ou de copolymères de chlorure de vinyle et d'acrylonitrile, la cellulose hydratée, le fluorure de polyvinylidène, les copolymères du fluorure de vinylidène, les polysulfones, les polyéthersulfones et les polyamides étant préférés.

**5.** Matrice selon la revendication 1, caractérisée en ce que la couche polymère greffée comporte une chaîne principale d'acrylate, de méthacrylate ou d'acrylamide, de préférence une chaîne principale de méthacrylate.

**6.** Matrice selon la revendication 1, caractérisée en ce que les groupes fonctionnels de la couche polymère greffée, pour la solvatation de celle-ci grâce à la phase liquide sous la forme d'une phase polaire et/ou essentiellement aqueuse, sont des groupes hydroxyles ou des groupes ioniques, les groupes ioniques étant des groupes d'acide sulfonique, des groupes carboxyles ou des groupes d ammonium quaternaire.

**7.** Matrice selon la revendication 1, caractérisée en ce que les groupes fonctionnels de la couche polymère greffée, pour la solvatation de celle-ci grâce à la phase liquide sous la forme d'une phase non polaire, sont des restes alkyles ayant de 4 à 18 atomes de carbone ou des restes aromatiques.

**8.** Matrice selon la revendication 1, caractérisée en ce que les groupes fonctionnels, les ligands ou les partenaires de réaction de la couche polymère greffée sont des groupes ioniques fortement ou faiblement acides ou des groupes ioniques fortement ou faiblement basiques, les groupes faiblement acides étant de préférence des groupes carboxyles, les groupes fortement acides étant de préférence des groupes d'acide sulfonique, les groupes faiblement basiques étant de préférence des groupes amino substitués par des groupes alkyles, et les groupes fortement basiques étant de préférence des groupes d'ammonium quaternaires.

9. Matrice selon la revendication 1, caractérisée en ce que les ligands de la couche polymère greffée pour la liaison sélective et réversible de protéines sont des ligands d'affinité, des restes alkyles ayant de 4 à 8 atomes de carbone, des restes phényle, des groupes mercapto, des ligands de boroate de phényle, des ligands thiophiles ayant de 2 à 4 atomes de soufre, sous la forme de groupes thioéthers et/ou de groupes sulfoniques, ou des agents de chélation auxquels sont liés des métaux lourds.

10. Matrice selon la revendication 1, caractérisée en ce que les ligands de la couche polymère greffée pour la liaison sélective et réversible de métaux lourds sont des agents de chélation, de préférence des groupes d'acide iminodiacétique ou des groupes qui possèdent de 2 à 4 atomes d'azote, sous la forme d'amines primaires et d'amines secondaires.

11. Matrice selon la revendication 1, caractérisée en ce que les partenaires de réaction de la couche polymère greffée sont des groupes réductibles ou oxydables.

12. Procédé de préparation d'une matrice poreuse, non particulaire et perméable par convection, qui provoque une adsorption, une modification chimique par catalyse, une réaction chimique ou une adsorption avec une liaison covalente simultanée ou retardée dans le temps, par rapport à au moins un composant d'une phase liquide qui est au contact de celle-ci, selon les revendications précédentes, caractérisé en ce que, sur un support ayant une structure spongieuse, qui contient un matériau ou dont la surface intérieure et la surface extérieure portent un matériau qui a des liaisons N-H aptes au greffage, ou dont la surface intérieure et la surface extérieure possèdent une couche de polyamide N-chloré apte au greffage avec des monomères éthyléniquement insaturés, on greffe une couche polymère limitée à la surface intérieure et à la surface extérieure, qui comporte des groupes fonctionnels pour sa solvatation grâce à la phase liquide et des groupes fonctionnels et/ou des ligands ou des partenaires de réaction, des ligands de colorants étant exclus en tant que groupes fonctionnels, ligands ou partenaires de réaction.

13. Procédé selon la revendication 12, caractérisé en ce que les monomères comportent des groupes réactifs au moyen desquels les groupes fonctionnels pour la solvatation et les groupes fonctionnels et/ou les ligands ou les partenaires de réaction peuvent être introduits a posteriori.

14. Procédé selon la revendication 13, caractérisé en ce qu'on utilise, comme monomère, l'éther méthylique de métacrylamidoglycolate, l'acrylate de glycidyle ou le méthacrylate de glycidyle, de préférence le méthacrylate de glycidyle.

15. Utilisation de la matrice selon les revendications précédentes pour une séparation de substances par adsorption, une catalyse hétérogène ou une synthèse en phase solide.

16. Utilisation de la matrice selon la revendication 15, caractérisée en qu'on fait d'abord adsorber sur la matrice un composant contenu dans la phase liquide et ensuite, on le fixe par covalence avec un retard dans le temps.

FIG.1

FIG.2